(19) Europäisches Patentamt
European Patent Office
Office européen des brevets

(11) **EP 4 375 540 A1**

(12) **EUROPÄISCHE PATENTANMELDUNG**

(43) Veröffentlichungstag:
**29.05.2024 Patentblatt 2024/22**

(21) Anmeldenummer: **23179757.2**

(22) Anmeldetag: **25.04.2016**

(51) Internationale Patentklassifikation (IPC):
*F16H 3/72* (2006.01)    *B60K 6/365* (2007.10)
*B60K 6/387* (2007.10)    *B60K 6/48* (2007.10)
*H02P 5/753* (2006.01)    *H02K 7/116* (2006.01)
*B60K 6/26* (2007.10)

(52) Gemeinsame Patentklassifikation (CPC):
**B60K 6/48; B60K 6/365; B60K 6/387; F03D 15/00;**
**F16H 3/724; H02P 5/753;** B60K 2006/268;
B60K 2006/4825; B60K 2006/4833;
F05B 2260/40311; H02K 7/116; Y02B 10/30;
Y02E 10/72; Y02T 10/62

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität: **27.04.2015 AT 2532015**
**01.10.2015 AT 6432015**

(62) Dokumentnummer(n) der früheren Anmeldung(en)
nach Art. 76 EPÜ:
**16724578.6 / 3 289 243**

(71) Anmelder: **SET Sustainable Energy Technologies**
**GmbH**
**9020 Klagenfurt am Wörthersee (AT)**

(72) Erfinder:
• **WALDNER, Markus**
**9020 Klagenfurt (AT)**

• **HEHENBERGER, Gerald**
**9020 Klagenfurt (AT)**
• **ERJAVEC, Miha**
**9020 Klagenfurt am Wörthersee (AT)**

(74) Vertreter: **Beer & Partner Patentanwälte KG**
**Lindengasse 8**
**1070 Wien (AT)**

Bemerkungen:
•Die Patentansprüche 17-21,23,24,28-41 gelten als
fallen gelassen, da die entsprechenden
Anspruchsgebühren nicht entrichtet wurden (R. 45(3)
EPÜ).
•Diese Anmeldung ist am 16.06.2023 als
Teilanmeldung zu der unter INID-Code 62 erwähnten
Anmeldung eingereicht worden.

(54) **TRIEBSTRANG FÜR PUMPEN, ENERGIEERZEUGUNGSANLAGEN ODER DERGLEICHEN UND VERFAHREN ZUM ANFAHREN EINES SOLCHEN TRIEBSTRANGES**

(57) Zum Anfahren eines Triebstranges mit einer Antriebswelle (2) einer Arbeitsmaschine (1), mit einer Antriebsmaschine (4, 42) und mit einem Differenzialgetriebe (3, 7 bis 9, 40) mit drei An- bzw. Abtrieben, wobei ein Abtrieb mit der Antriebswelle (2), ein erster Antrieb mit der Antriebsmaschine (4, 42) und ein zweiter Antrieb mit einem Differenzialantrieb (5) verbindbar ist, wird die Antriebsmaschine (4, 42) von einer Drehzahl von Null oder annähernd Null angefahren, während der Differenzialantrieb (5) gleichzeitig mit dem ersten und dem zweiten Antrieb verbunden ist.

Fig. 2

EP 4 375 540 A1

# Fig. 2a

Drehmoment Arbeitsmaschine

**Beschreibung**

Die Erfindung betrifft einen Triebstrang mit den Merkmalen des Oberbegriffs des Anspruchs 1.

Die Erfindung betrifft des Weiteren ein Verfahren zum Anfahren eines Triebstranges mit den Merkmalen des Oberbegriffs von Anspruch 25.

Ein allgemeines Problem von Arbeitsmaschinen, wie Fördereinrichtungen, z.B. Pumpen, Kompressoren und Ventilatoren, oder wie Mühlen, Brecher, Fahrzeuge usw., ist ein effizienter, drehzahlvariabler Betrieb, bzw. das Anfahren unter Last, bzw. der Betrieb von z.B. Energiegewinnungsanlagen bis zu einer Drehzahl gleich Null. Im Weiteren werden elektrische Maschinen als Beispiel für Antriebsmaschinen bzw. Generatoren herangezogen, das Prinzip gilt aber für alle möglichen Arten von Antriebsmaschinen, so wie z.B. für Verbrennungskraftmaschinen.

Die heute am häufigsten verwendeten elektrischen Antriebe bzw. Generatoren sind Drehstrommaschinen, wie z.B. Asynchronmaschinen und Synchronmaschinen, welche im Wesentlichen nur mit konstanter Drehzahl betrieben werden. Es muss darüber hinaus eine Drehstrommaschine und ein dieser nachgelagertes Stromnetz entsprechend groß ausgelegt werden, damit sie vom Stillstand weg ein erforderliches Antriebsmoment liefern kann. Elektrische Maschinen werden daher auch aus diesem Grund, anstatt direkt an ein Netz angeschlossen zu werden, häufig in Kombination mit einem Frequenzumrichter als drehzahlvariabler Antrieb ausgeführt. Damit kann man zwar einen drehzahlvariablen Betrieb von Drehzahl Null realisieren, ohne das Netz stark zu belasten, die Lösung ist jedoch teuer und mit wesentlichen Wirkungsgradeinbußen verbunden. Eine im Vergleich dazu kostengünstigere und auch bezüglich Wirkungsgrad bessere Alternative ist der Einsatz von Differenzialsystemen - beispielsweise gemäß AT 507 394 A. Grundsätzliche Einschränkung hierbei ist jedoch, dass abhängig vom Übersetzungsverhältnis der Differenzialstufe nur ein relativ kleiner Drehzahlbereich und daher im sogenannten Differenzialmodus, d.h. bei einer Drehzahländerung mit Hilfe des Differenzialantriebs bei Betriebsdrehzahl der Antriebsmaschine, praktisch keine niedrigen Drehzahlen an der Antriebswelle einer Arbeitsmaschine erreicht werden können.

Um dies zu realisieren, gibt es verschiedene Möglichkeiten. Gemäß DE 20 2012 101 708 U beispielsweise kann man das Übersetzungsverhältnis des Differenzialgetriebes auf 1 festlegen. Auf dieser Basis kann man mit dem Differenzialantrieb den kompletten Triebstrang antreiben bzw. die Antriebsmaschine auf Synchrondrehzahl bringen und diese in weiterer Folge mit dem Netz synchronisieren.

Nachteil dieser Lösung ist, dass der Differenzialantrieb und der ihm nachgelagerte Frequenzumrichter wesentlich kleiner dimensioniert sind als die Antriebsmaschine und daher auch nur ein entsprechend kleines Drehmoment liefern können. Dies reicht nicht aus, die Antriebsmaschine bis zur Synchrondrehzahl zu beschleunigen, wenn die Arbeitsmaschine in Betrieb ist.

Die AT 514 396 A zeigt eine Lösung, mit der man Antriebsmaschinen in einen Drehzahlbereich mit hohem Drehmoment beschleunigen und in einem weiteren Schritt die Arbeitsmaschine von Drehzahl Null weg anfahren kann. Gelöst wir dies dadurch, dass die Antriebsmaschine von einer Drehzahl von Null oder annähernd Null angefahren wird, während auf die Antriebswelle ein äußeres, bremsendes Drehmoment wirkt, und dass in einer Beschleunigungsphase der Antriebswelle der zweite Antrieb gebremst wird. Nachteil dieser Lösung ist, dass die dafür notwendige Bremsvorrichtung aufwändig ist und mit einem Differenzialantrieb in der Größe von z.B. 20% der Systemgesamtleistung nur ein kontinuierlicher Drehzahlbereich von ca. 50% bis 100% der Arbeitsdrehzahl realisiert werden kann.

Aufgabe der Erfindung ist es daher, eine Lösung zu finden, mit der man Antriebsmaschinen vorzugsweise unter Last beschleunigen kann, beispielsweise um z.B. direkt an ein Netz gekoppelte, elektrische Maschinen mit dem Netz zu synchronisieren, bzw. einen großen Arbeitsdrehzahlbereich realisieren kann.

Gelöst wir diese Aufgabe mit einem Triebstrang mit den Merkmalen des Anspruchs 1.

Gelöst wird diese Aufgabe des Weiteren mit einem Verfahren mit den Merkmalen des Anspruchs 25.

Der Kern eines Differenzialsystems ist ein Differenzialgetriebe, das in einer einfachen Ausführung eine einfache Planetengetriebestufe mit drei An- bzw. Abtrieben sein kann, wobei ein Abtrieb mit der Antriebswelle einer Arbeitsmaschine, ein erster Antrieb mit einer Antriebsmaschine und ein zweiter Antrieb mit einem Differenzialantrieb verbunden ist. Damit kann die Arbeitsmaschine bei konstanter Drehzahl der Antriebsmaschine drehzahlvariabel betrieben werden, wobei der Differenzialantrieb eine variable Drehzahl der Antriebswelle ermöglicht.

Um eine Arbeitsmaschine vom Stillstand aus in Betrieb zu setzen und, wenn die Antriebsmaschine eine elektrische Maschine ist, zusätzlich eine Antriebsmaschine vom Stillstand aus vorzugsweise auf Synchrondrehzahl zu bringen, kann der Betrieb des Systems erfindungsgemäß z.B. in den folgenden 3 Phasen stattfinden:

Phase 1: Ein Differenzialantrieb wird im Stillstand sowohl mit dem ersten Antrieb als auch mit dem zweiten Antrieb des Differenzialsystems verbunden. Anschließend wird der Differenzialantrieb beschleunigt und die Arbeitsmaschine beginnt zu arbeiten. Abhängig von der Drehmomentkennlinie der Arbeitsmaschine und der Leistung des Differenzialantriebes, wird in diesem Betriebsmodus I vorzugsweise ein Arbeitsdrehzahlbereich von bis zu ca. 40%-50% der Arbeits-Nenndrehzahl der Arbeitsmaschine realisiert. Die Antriebsmaschine bleibt in diesem Betriebsmodus I vom Netz getrennt. Die Übersetzungsverhältnisse der Getriebestufen, über welche der Differenzialantrieb mit den beiden Antrieben verbunden ist, werden vorzugsweise so gewählt, dass die Antriebsmaschine zumindest annähernd ihre Betriebsdrehzahl erreicht, sobald der Differenzialantrieb in die Nähe seiner Leistungsgrenze kommt. Der Differenzialantrieb arbeitet in dieser Phase motorisch - d.h. er bezieht Energie vom Netz.

Phase 2: Die mit dem ersten Antrieb des Differenzialsystems verbundene und jetzt im Betriebsdrehzahlbereich laufende Antriebsmaschine wird nun mit dem Netz verbunden. Da der Differenzialantrieb im unteren Arbeitsdrehzahlbereich des Betriebsmodus II generatorisch arbeitet - d.h. er liefert Energie ins Netz, wird im nächsten Schritt das Drehmoment des Differenzialantriebes vom motorischen in den generatorischen Betrieb geregelt. Dadurch wird die Antriebsmaschine kontinuierlich immer stärker belastet, bis das gesamte Differenzialsystem vorzugsweise in den Bereich der unteren Grenze des Arbeitsdrehzahlbereiches des Betriebsmodus II kommt.
Um die Systembelastungen möglichst gering zu halten, erfolgt vorzugsweise der Übergang vom motorischen in den generatorischen Betrieb des Differenzialantriebes gedämpft, d.h. nicht schlagartig.

Phase 3: Sobald sich am Differenzialantrieb und an der Antriebsmaschine bezüglich Drehzahl und Drehmoment ein Betriebspunkt im unteren Arbeitsdrehzahlbereich des Betriebsmodus II eingestellt hat, wird der Differenzialantrieb vom ersten Antrieb des Differenzialsystems getrennt. Das System arbeitet nun im Differenzialmodus, womit in dieser dritten Phase für die Arbeitsmaschine ein maximales Drehmoment bei maximaler Antriebsdrehzahl realisiert werden kann.

Bevorzugte Ausführungsformen der Erfindung sind Gegenstand der Unteransprüche.
Nachfolgend werden bevorzugte Ausführungsformen der Erfindung mit Bezug auf die angeschlossenen Zeichnungen erläutert. Es zeigt:

Fig. 1    das Prinzip eines Differenzialsystems für einen Antrieb einer Pumpe gemäß Stand der Technik,
Fig. 2    eine erfindungsgemäße Ausführungsform eines Differenzialsystems für schnell laufende Antriebe,
Fig. 2a   ein Diagramm mit einem typischen Drehmomentverlauf einer Pumpe,
Fig. 3    eine weitere erfindungsgemäße Ausführungsform eines Differenzialsystems für schnell laufende Antriebe,
Fig. 4    einen zeitlichen Verlauf von Drehzahl- und Leistungsparameter eines Differenzialsystems während des Anfahrens,
Fig. 5    eine erfindungsgemäße Ausführungsform eines Differenzialsystems für langsam laufende Antriebe,
Fig. 6    eine weitere erfindungsgemäße Ausführungsform, in der ein Differenzialantrieb mit einem zweiten Antrieb und einem Abtrieb eines Differenzialsystems verbindbar ist,
Fig. 7    eine weitere erfindungsgemäße Ausführungsform, in der ein Differenzialantrieb 5 eines Differenzialsystems mit dem zweiten Antrieb verbunden und dem Abtrieb verbindbar ist,
Fig. 8    eine weitere erfindungsgemäße Ausführungsform, in der ein Differenzialantrieb 5 eines Differenzialsystems mit dem zweiten Antrieb verbunden und dem Abtrieb verbindbar ist,
Fig. 9    eine weitere erfindungsgemäße Ausführungsform, in der ein Abtrieb mit einem ersten Antrieb eines Differenzialsystems verbindbar ist,
Fig. 10   eine weitere erfindungsgemäße Ausführungsform, in der ein Differenzialantrieb via eines zweiten Antriebs mit einem ersten Antrieb eines Differenzialsystems verbindbar ist,
Fig. 11   eine erfindungsgemäße Ausführungsform eines Differenzialsystems mit einem Plusgetriebe,
Fig. 12   eine weitere erfindungsgemäße Ausführungsform eines Differenzialsystems mit einem Plusgetriebe, und
Fig. 13   eine weitere erfindungsgemäße Ausführungsform eines Differenzialsystems für eine Energiegewinnungsanlage.

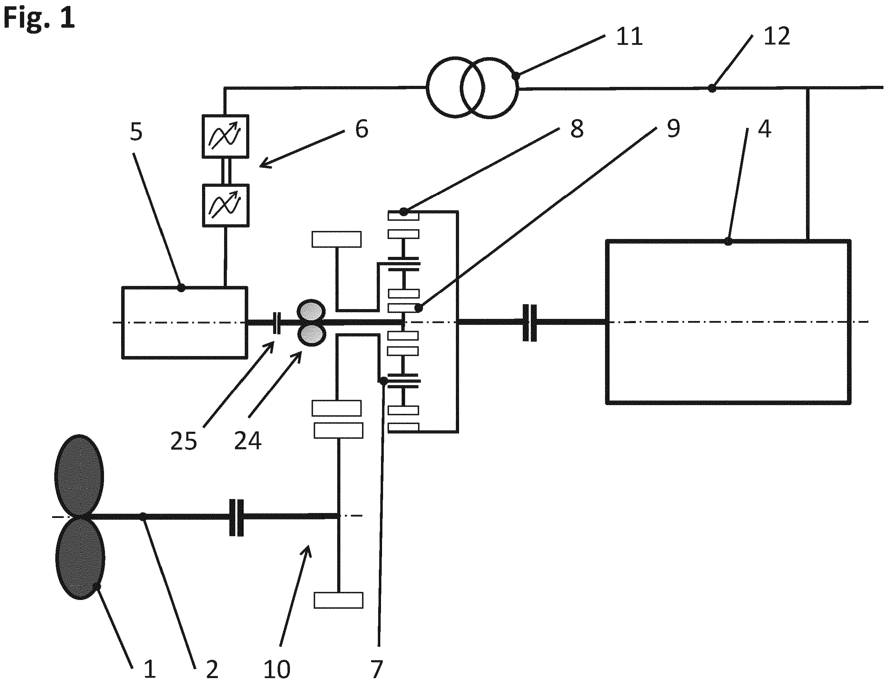

Fig. 1 zeigt das Prinzip eines Differenzialsystems für einen Triebstrang am Beispiel einer Pumpe. Dabei ist die Arbeitsmaschine 1 der symbolisch dargestellte Rotor einer Pumpe, welcher über eine Antriebswelle 2 und ein Differenzialgetriebe 7 bis 9 von einer Antriebsmaschine 4 angetrieben wird. Die Antriebsmaschine 4 ist vorzugsweise eine Mittelspannungs-Drehstrommaschine, welche an ein Netz 12, welches im gezeigten Beispiel aufgrund einer Mittelspannungs-Drehstrommaschine ein Mittelspannungsnetz ist, angeschlossen wird. Das gewählte Spannungsniveau hängt vom Einsatzfall und vor allem dem Leistungsniveau der Antriebsmaschine 4 ab und kann ohne Einfluss auf die Grundfunktion des erfindungsgemäßen Systems jedes gewünschte Spannungsniveau haben. Entsprechend der Polpaarzahl der Antriebsmaschine 4 ergibt sich ein bauartspezifischer Betriebsdrehzahlbereich. Der Betriebsdrehzahlbereich ist dabei jener Drehzahlbereich, in dem die Antriebsmaschine 4 ein definiertes bzw. gewünschtes oder erforderliches Drehmoment liefern kann, und in dem die Antriebsmaschine 4 im Falle einer elektrischen Antriebsmaschine mit dem Netz 12 synchronisiert werden, bzw. im Falle einer Verbrennungskraftmaschine gestartet bzw. betrieben werden kann. Ein Planetenträger 7 des Differenzialgetriebes ist mit der Antriebswelle 2 verbunden, die Antriebsmaschine 4 mit einem Hohlrad 8 und ein Sonnenrad 9 des Differenzialgetriebes mit einem Differenzialantrieb 5. Der Differenzialantrieb 5 ist vorzugsweise eine Drehstrommaschine und insbesondere eine Asynchronmaschine oder eine permanentmagneterregte Synchronmaschine.

Anstelle des Differenzialantriebes 5 kann auch ein hydrostatisches Stellgetriebe eingesetzt werden. Dabei wird der Differenzialantrieb 5 durch eine hydrostatische Pumpe/Motor-Kombination ersetzt, welche mit einer Druckleitung verbunden und welche beide vorzugsweise im Durchflussvolumen verstellbar sind. Damit sind wie im Falle eines drehzahlvariablen, elektrischen Differenzialantriebes 5 die Drehzahlen regelbar.

Der Kern des Differenzialsystems ist in dieser Ausführungsform somit eine einfache Planetengetriebestufe mit drei An- bzw. Abtrieben, wobei ein Abtrieb mit der Antriebswelle 2 der Arbeitsmaschine 1, ein erster Antrieb mit der Antriebsmaschine 4 und ein zweiter Antrieb mit dem Differenzialantrieb 5 verbunden ist.

Um den Drehzahlbereich des Systems optimal anpassen zu können, wird ein Anpassungsgetriebe 10 zwischen dem Planetenträger 7 und der Arbeitsmaschine 1 implementiert. Alternativ zur gezeigten Stirnradstufe kann das Anpassungsgetriebe 10 beispielsweise auch mehrstufig sein bzw. als Zahnriemen oder Kettentrieb ausgeführt und/oder mit einer Planetengetriebestufe oder einer Kegelradstufe kombiniert werden. Mit dem Anpassungsgetriebe 10 kann man darüber hinaus einen Achsversatz für die Arbeitsmaschine 1 realisieren, der eine koaxiale Anordnung des Differenzialantriebes 5 und der Antriebsmaschine 4 ermöglicht. Elektrisch ist der Differenzialantrieb 5 mittels vorzugsweise einem Niederspannungs-Umrichter 6 und - sofern erforderlich - einem Transformator 11 an das Netz 12 angebunden. Wesentlicher Vorteil dieses Konzeptes ist, dass die Antriebsmaschine 4 direkt, das heißt ohne aufwändige Leistungselektronik, an das Netz 12 angebunden werden kann. Der Ausgleich zwischen variabler Rotordrehzahl und fixer Drehzahl der netzgebundenen Antriebsmaschine 4 wird durch den drehzahlvariablen Differenzialantrieb 5 realisiert.

Die Drehmomentgleichung für das Differenzialsystem lautet:

$$Drehmoment_{Differenzialantrieb} = Drehmoment_{Antriebswelle} * y / x,$$

Der Größenfaktor y/x ist ein Maß für die Übersetzungsverhältnisse im Differenzialgetriebe 3 und im Anpassungsgetriebe 10. Das Drehmoment an den Ab- und Antrieben ist zueinander proportional, wodurch der Differenzialantrieb 5 das Drehmoment im gesamten Triebstrang regeln kann. Die Leistung des Differenzialantriebs 5 ist im Wesentlichen proportional dem Produkt aus prozentueller Abweichung der Drehzahl der Arbeitsmaschine 1 von deren Grunddrehzahl, multipliziert mit der Antriebswellenleistung. Die Grunddrehzahl ist dabei jene Drehzahl, welche sich an der Arbeitsmaschine 1 einstellt, wenn der Differenzialantrieb 5 die Drehzahl gleich Null hat. Dementsprechend erfordert ein großer Arbeitsdrehzahlbereich der Arbeitsmaschine 1 eine entsprechend große Dimensionierung des Differenzialantriebes 5. Hat der Differenzialantrieb 5 beispielsweise eine Nennleistung von rund 20% der System-Gesamtleistung (Nennleistung der Arbeitsmaschine), bedeutet dies unter Ausnutzung eines typischen sogenannten Feldschwächebereichs des Differenzialantriebes 5, dass an der Arbeitsmaschine 1 minimale Arbeitsdrehzahlen von etwa 50% der Arbeits-Nenndrehzahl realisiert werden können. Darin ist auch der Grund zu sehen, warum Differenzialsysteme gemäß Stand der Technik für kleine Arbeitsdrehzahlbereiche besonders gut geeignet sind, wobei aber grundsätzlich jeder Arbeitsdrehzahlbereich realisierbar ist. Es kann jedoch festgestellt werden, dass höherpolige Drehstrommaschinen standardmäßig meist höhere Überdrehzahlen in Relation zur Synchrondrehzahl erlauben, was prinzipiell einen (bei gleicher Nennleistung des Differenzialantriebes 5) größeren Arbeitsdrehzahlbereich der Arbeitsmaschine 1 ermöglicht, weil ein größerer Feldschwächebereich des Differenzialantriebes 5 möglich ist.

Um das Differenzialsystem von einer Drehzahl gleich Null anfahren zu können, wird der Differenzialantrieb 5 mittels einer Kupplung 25 mit dem Sonnenrad 9 trennbar verbunden. Eine Synchronisationsbremse 24 wirkt auf den zweiten Antrieb des Differenzialsystems und somit auf das Sonnenrad 9 und damit auf den gesamten Triebstrang. Beim Anfahren wird in dieser Ausführungsform eines Differenzialsystems in einem ersten Schritt der Differenzialantrieb 5 durch die Kupplung 25 vom Rest des Differenzialsystems entkoppelt. Wird nun die Antriebsmaschine 4 hochgefahren und mit dem Netz 12 verbunden, so dreht das Sonnenrad 9 frei mit und es kann sich im gesamten Triebstrang kein nennenswertes Drehmoment aufbauen. Somit verbleibt auch in diesem Fall die Arbeitsmaschine 1 in einem Bereich kleiner Drehzahl und die Antriebsmaschine 4 kann ohne nennenswertes äußeres Gegenmoment mit dem Netz 12 verbunden werden.

Sobald die Antriebsmaschine 4 über eine gewisse Drehzahl beschleunigt und die Arbeitsmaschine 1 im Wesentlichen still steht, stellt sich am Sonnenrad 9 eine entsprechend dem Übersetzungsverhältnis des Differenzialgetriebes hohe Drehzahl ein, welche meist über dem erlaubten Regeldrehzahlbereich des Differenzialantriebes 5 liegt. Der Regeldrehzahlbereich ist der Drehzahlbereich, in dem der Differenzialantrieb 5 arbeitet, um den Arbeitsdrehzahlbereich der Arbeitsmaschine 1 realisieren zu können. Der Regeldrehzahlbereich wird dabei vor allem durch die vom Hersteller spezifizierten Spannungs-, Strom- und Drehzahlgrenzen bestimmt.

Der Differenzialantrieb 5 kann bei diesem Ausführungsbeispiel in dieser Phase nicht mit dem Sonnenrad 9 verbunden werden. In einem weiteren Schritt wird daher mittels Synchronisationsbremse 24 der mit dem Sonnenrad 9 verbundene zweite Antrieb des Differenzialsystems auf eine Drehzahl verzögert, welche im Regeldrehzahlbereich des Differenzialantriebes 5 liegt. Dies kann, abhängig vom realisierten Bremssystem 24 bzw. den Anforderungen an den Triebstrang, sowohl Drehzahl/Drehmoment-geregelt als auch -ungeregelt erfolgen. In weiterer Folge wird der differenzialgetriebeseitige Teil der Kupplung 25 vorzugsweise mittels Differenzialantrieb 5 mit der Drehzahl des zweiten Antriebs des Differenzialsystems synchronisiert und anschließend die Kupplung 25 geschlossen. Durch Betätigung der Synchronisationsbremse 24 (in Fig. 1 symbolisch als hydrodynamische Bremse dargestellt) und damit Verzögerung des zweiten Antriebes des Differenzialsystems wird zwangsweise die Antriebswelle 2 beschleunigt, wobei das dazu zur Verfügung stehende Drehmoment durch das Minimum aus der auf die Antriebswelle 2 wirkenden Bremskraft der Synchronisationsbremse 24 einerseits und dem Kippmoment der Antriebsmaschine 4 andererseits bestimmt wird.

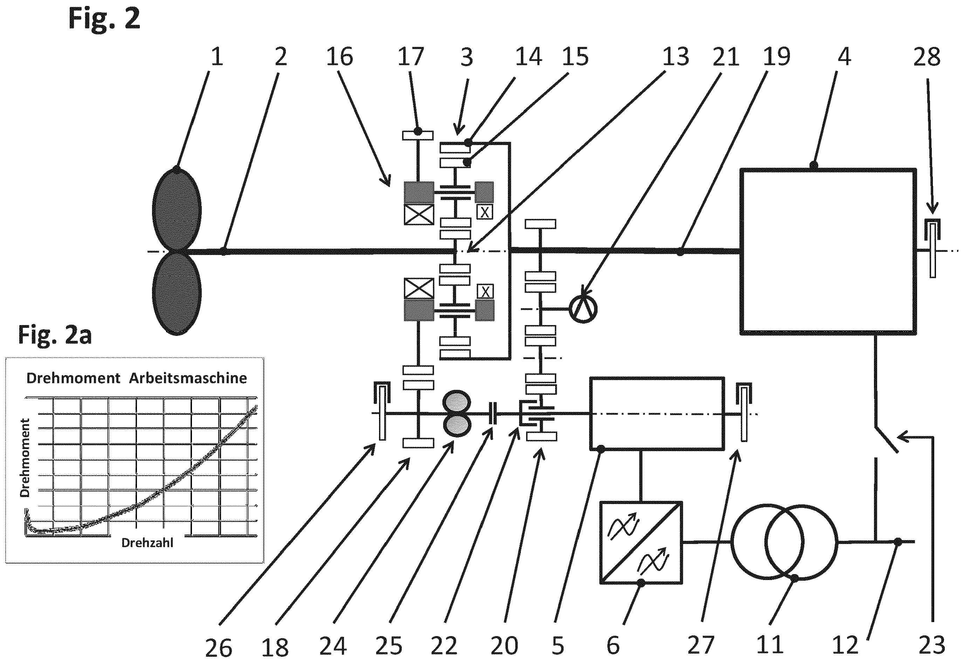

Fig. 2 zeigt eine erfindungsgemäße Ausführungsform eines Differenzialsystems, welches einen übersynchronen Arbeitsdrehzahlbereich ohne Anpassungsgetriebe ermöglicht. Diese Ausführungsform kommt bevorzugt bei schnell laufenden Arbeitsmaschinen zum Einsatz. Der dargestellte Triebstrang weist auch hier wie in Fig. 1 eine Arbeitsmaschine 1, eine Antriebswelle 2, eine Antriebsmaschine 4 und einen Differenzialantrieb 5 auf, welche mit den Ab- bzw. Antrieben eines Differenzialgetriebes 3 verbunden sind. Der Differenzialantrieb 5 ist mittels eines Umrichters 6 (bestehend aus vorzugsweise motorseitigem und netzseitigem Gleich- bzw. Wechselrichter - hier vereinfacht als Einheit dargestellt) und eines Transformators 11 an ein Netz 12 angeschlossen. Die Antriebsmaschine 4 ist mittels eines Schalters 23 mit dem Netz 12 verbindbar.

Da in dem ausgeführten Beispiel die Arbeitsmaschine 1 mit einer Drehzahl betrieben wird, die deutlich über der synchronen Drehzahl der Antriebsmaschine 4 liegt, wird die Antriebswelle 2 mit dem Sonnenrad 13 und die Antriebsmaschine 4 mittels einer Verbindungswelle 19 mit dem Hohlrad 14 verbunden. Der Differenzialantrieb 5 ist mit dem Planetenträger 16 mit zwei oder mehreren Planetenrädern 15 verbindbar. Damit kann man auf einfache Art mit einer Planetengetriebestufe und ohne Anpassungsgetriebe eine Übersetzung zwischen Antriebsmaschine 4 und Arbeitsmaschine 1 von beispielsweise 2,5 bis 6,5 erreichen. Mit beispielsweise einem Stufenplanetensatz sind darüber hinaus noch wesentlich höhere Übersetzungsverhältnisse erreichbar. Ein Stufenplanetensatz ist dadurch gekennzeichnet, dass die Planetenräder 15 jeweils zwei Zahnräder aufweisen, welche miteinander drehfest verbunden sind und unterschiedliche Teilkreisdurchmesser aufweisen, wobei ein Zahnrad mit dem Sonnenrad und das zweite Zahnrad mit dem Hohlrad zusammenwirkt.

Als Arbeitsmaschine 1 ist in den Figuren 1 bis 3, 5 und 9 bis 12 beispielhaft symbolisch eine Pumpe dargestellt. Die hier und zu den folgenden Figuren beschriebenen Prinzipien sind jedoch auch bei Antrieben für Arbeitsmaschinen, wie z.B. Kompressoren, Ventilatoren und Förderbänder, Mühlen, Brecher, etc. oder Energiegewinnungsanlagen und dergleichen anwendbar.

Eine Pumpe hat als Strömungsmaschine einen quadratischen Drehmomentverlauf, dem beim Anfahren bautypische Losbrechmomente aus der Lagerung der Triebstrangelemente etc. überlagert sind. Dies führt dazu, dass beim Anfahren zuerst ein Drehmoment in der Höhe von z.B. 10%-20% des Nenndrehmomentes der Arbeitsmaschine 1 zu überwinden ist. Mit steigender Drehzahl sinkt dann das erforderliche Antriebsdrehmoment (durch Wegfall des Losbrechmomentes) und es stellt sich ein entsprechend der Arbeitsdrehzahl der Arbeitsmaschine 1 (etwa quadratisch) ansteigendes Drehmoment ein, welches bei Nenndrehzahl das Nenndrehmoment erreicht. Der beschriebene Drehmomentverlauf ist in einem Diagramm in Fig. 2a beispielhaft dargestellt.

Mit einer von der Antriebsmaschine 4 bestimmten Drehzahl des Hohlrades 14 und einer betriebsbedingt geforderten Drehzahl des Sonnenrades 13 ergibt sich zwangsläufig eine einzustellende Drehzahl bzw. ein einzustellendes Drehmoment am Planetenträger 16, welche vom Differenzialantrieb 5 zu regeln sind.

Der Planetenträger 16 kann beispielsweise einteilig oder mehrteilig mit drehfest miteinander verbundenen Komponenten ausgeführt sein. Da das Drehmoment am Planetenträger 16 hoch ist, ist es von Vorteil, z.B. eine Übersetzungsstufe 17, 18 zwischen dem Planetenträger 16 und dem Differenzialantrieb 5 zu implementieren. Dafür bietet sich z.B. eine Stirnradstufe an, wobei das Zahnrad 17 drehfest mit dem Planetenträger 16 und das Zahnrad 18 mit dem Differenzialantrieb 5 verbunden ist. Alternativ kann die Übersetzungsstufe beispielsweise auch mehrstufig sein, bzw. als Zahnriemen, Kettentrieb, Planetenstufe oder als Winkelgetriebe ausgeführt werden. Anstelle der Übersetzungsstufe 17, 18 kann auch ein gegebenenfalls in Stufen oder stufenlos verstellbares Übersetzungsgetriebe implementiert werden.

Fig. 2 zeigt einen Differenzialantrieb 5 mit einem Umrichter 6. Ebenso können mehrere Differenzialantriebe den Planetenträger 16 antreiben, womit das zu übertragende Drehmoment der Übersetzungsstufe 17, 18 auf diese Differenzialantriebe verteilt wird. Die Differenzialantriebe können dabei gleichmäßig oder auch asymmetrisch über den Umfang des Zahnrades 17 verteilt sein. Vorzugsweise - jedoch nicht notwendigerweise - werden die Differenzialantriebe dabei von einem gemeinsamen Umrichter 6 angesteuert, wobei dann vorzugsweise ein Differenzialantrieb als sogenannter "Master" und der/die weitere(n) Differenzialantrieb(e) als sogenannter "Slave" fungieren. Die Differenzialantriebe können auch von mehreren motorseitigen Gleich- bzw. Wechselrichtern einzeln oder in Gruppen angesteuert werden, wobei diese mit den Differenzialantrieben verbundenen sogenannten motorseitigen Gleich- bzw. Wechselrichter vorzugsweise einen gemeinsamen, via Gleichstromzwischenkreis verbundenen, an das Netz 12 via Transformator 11 angeschlossenen sogenannten netzseitigen Gleich- bzw. Wechselrichter haben.

Wenn das System mit mehreren Differenzialantrieben ausgestattet ist, dann wird vorzugsweise nur ein Differenzialantrieb 5 über ein Hilfsgetriebe mit der Antriebsmaschine 4 verbunden - wie in Fig. 2 gezeigt. In diesem Fall treibt zumindest ein zweiter Differenzialantrieb via Planententräger 16 und Übersetzungsstufe 17, 18 das Hilfsgetriebe 20 zusätzlich zum ersten Differenzialantrieb 5 an. Damit ist nur ein Hilfsgetriebe 20 erforderlich.

Mit der Verbindungswelle 19 und in weiterer Folge mit der Antriebsmaschine 4 bzw. dem ersten Antrieb des Differenzialsystems ist ein Hilfsgetriebe 20 verbunden. Dieses Hilfsgetriebe 20 ist mittels einer Kupplung 22 mit dem Differenzialantrieb 5 verbindbar und treibt vorzugsweise auch eine Schmierölpumpe 21 an. Die Kupplung 22 kann grundsätzlich überall zwischen Differenzialantrieb 5 und dem ersten Antrieb des Differenzialsystems positioniert sein - d.h. auch in einer anderen als der dem Differenzialantrieb 5 nächstgelegenen Stufe des Hilfsgetriebes 20. Die Kupplung 22 ist vorzugsweise als Klauenkupplung, Zahnkupplung, Lamellenkupplung oder als Freilauf ausgeführt. Ein Freilauf (auch als Überholkupplung bezeichnet) ist dabei eine nur in eine Drehrichtung wirkende Kupplung. Er kann auch in Form einer selbstsynchronisierenden Schaltkupplung ausgeführt werden. Dies ist ein Freilauf, bei dem die Drehmomentübertragung über eine Zahnkupplung erfolgt. Die Antriebsmaschine 4 kann auch mit einer Getriebe-Zwischenstufe des Hilfsgetriebes 20 verbunden sein, wobei die Verbindung des Hilfsgetriebes 20 mit dem ersten Antrieb bestehen bleibt.

Der Differenzialantrieb 5 ist in der gezeigten Ausführung über eine Kupplung 25 trennbar mit der Übersetzungsstufe 17, 18 verbunden. Um das System anzufahren, wird der Differenzialantrieb 5 durch Schließen der Kupplung 25 mit der Übersetzungsstufe 17, 18 und durch Schließen der Kupplung 22 mit dem Hilfsgetriebe 20 verbunden. Indem anschließend der Differenzialantrieb 5 hochgefahren wird, beschleunigen somit Arbeitsmaschine 1 und die Antriebsmaschine 4 gleichzeitig. Im Falle der Ausführung der Kupplung 22 in Form eines Freilaufes überträgt dieser selbsttätig die Drehbewegung des Differenzialantriebes 5 auf das Hilfsgetriebe 20 bzw. die Antriebsmaschine 4.

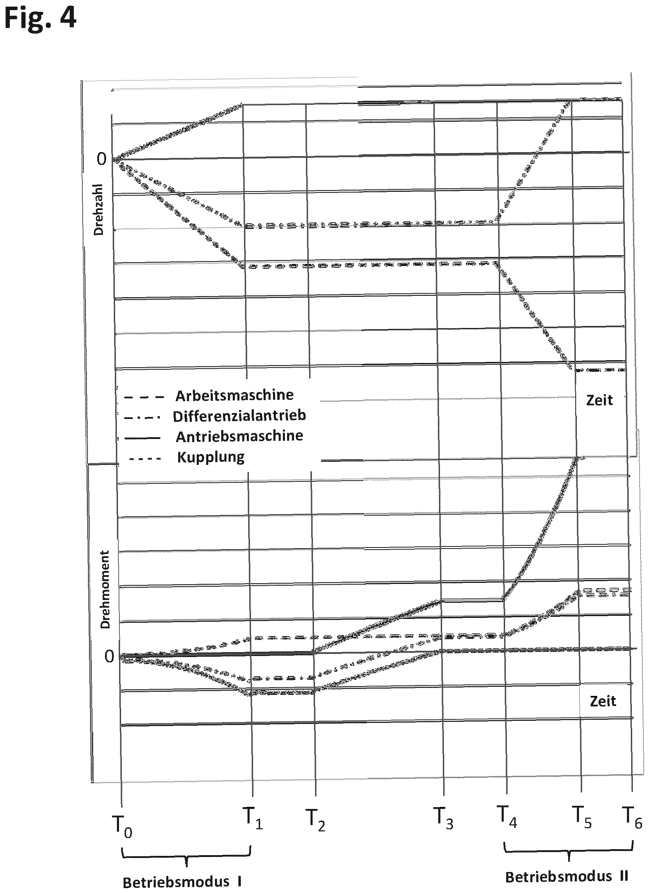

Ist die Antriebsmaschine 4 als Asynchronmaschine ausgeführt, so wird diese vorzugsweise auf Betriebsdrehzahl gebracht und anschließend der Schalter 23 geschlossen und die Antriebsmaschine 4 mit dem Netz 12 verbunden. Diese zieht, wenn sie mit dem Netz 12 verbunden wird, nur kurzzeitig einen Magnetisierungsstrom. Dieser ist zwar höher als der Nennstrom der Antriebsmaschine 4, steht jedoch nur für wenige Netzperioden an und liegt weit unter dem sich einstellenden Strom, den die Antriebsmaschine 4 ziehen würde, wenn diese unter Last ans Netz geschaltet wird. Dieser Magnetisierungsstrom kann im Bedarfsfall durch Einsatz verschiedener anerkannter technischer Methoden zusätzlich reduziert werden. Anschließend wird die Kupplung 22 geöffnet und das Differenzialsystem arbeitet im sogenannten Differenzialmodus. Ist die Kupplung 22 als Freilauf ausgeführt, so wird die Verbindung selbsttätig gelöst, sobald die Drehzahl des treibenden Teils (Differenzialantrieb 5) kleiner als die Drehzahl des zu treibenden Teils (in Fig. 2 Hilfsgetriebe 20) wird (vergl. hierzu auch Fig. 4). Ist die Antriebsmaschine 4 als Synchronmaschine ausgeführt, so kann diese gemäß den anerkannten Regeln der Technik mit dem Netz synchronisiert und somit stoßfrei ans Netz geschaltet werden. Der Differenzialantrieb 5 hilft dabei, die Antriebsmaschine 4 mit dem Netz zu synchronisieren, indem dieser die Drehzahl und vorzugsweise auch den Phasenwinkel der Antriebsmaschine 4 regeln und mit dem Netz 12 synchronisieren kann.

Ist die Antriebsmaschine 4 eine Verbrennungskraftmaschine, so kann diese mit Unterstützung des Differenzialantriebes 5 gestartet werden.

Im Falle einer Betriebsstörung (z.B. Netzausfall) würden im schlimmsten Fall sowohl die Antriebsmaschine 4 als auch die Arbeitsmaschine 1 unkontrolliert auslaufen. Um in einem solchen Fall den im Differenzialmodus arbeitenden Differenzialantrieb 5 vor Überdrehzahl zu schützen, kann man entweder eine Bremse 26, welche auf den zweiten Antrieb des Differenzialsystems wirkt und/oder eine Bremse 27, welche direkt auf den Differenzialantrieb 5 wirkt einsetzen. Als alternative Lösung bietet sich an, die Kupplung 25 zu öffnen und dadurch den Differenzialantrieb 5 vom restlichen Differenzialsystem zu trennen.

Ist die Kupplung 22 als Freilauf ausgeführt, so wird dessen Verbindung selbsttätig aktiviert sobald die Drehzahl des treibenden Teils (Hilfsgetriebe 20) kleiner als die Drehzahl des zu treibenden Teils (Differenzialantrieb 5) wird, wodurch eine Überdrehzahl des Differenzialantriebes 5 automatisch verhindert wird.

Damit sind bei Einsatz eines Freilaufs als Kupplung 22 für die Betriebsmodi "Anfahren" und "Differenzialbetrieb" bzw. "Betriebsstörung" weder die Kupplung 25 noch die Bremsen 26 bzw. 27 erforderlich.

Ist die Kupplung 22 als Lamellenkupplung ausgeführt, so wird diese im Falle einer Betriebsstörung vorzugsweise dann aktiviert, wenn die Drehzahldifferenz zwischen der abtreibenden Welle des Hilfsgetriebes 20 und dem Differenzialantriebe 5 ein Minimum (idealerweise bei einer Drehzahldifferenz von annähernd Null) ist.

In einer weiteren Ausführungsform der Erfindung kann man die Bremse 26 auch dazu verwenden, den zweiten Antrieb des Differenzialsystems während des beschriebenen Anfahrvorganges zu bremsen, um ein zeitgleiches Hochlaufen des Planententrägers 16 zu vermeiden. Dabei bleibt die Kupplung 22 geschlossen und die Kupplung 25 geöffnet. Damit kann man die Arbeitsmaschine 1 von einer Arbeitsdrehzahl gleich Null weg betreiben. Die maximal erreichbare Antriebsleistung für die Arbeitsmaschine 1 ist jedoch entsprechend der Leistungskapazität des Differenzialantriebes 5 begrenzt. Da jedoch der Betrieb z.B. einer Kesselwasserspeisepumpe auch Betriebsweisen mit kleiner Drehzahl (kleiner als die erreichbare Arbeitsdrehzahl im Differenzialmodus) und kleiner Leistung bzw. auch wartungsbedingte Inbetriebnahmen umfasst, sind diese durch diese Ausführungsform realisierbar.

Ein ähnliches Ergebnis erzielt man, indem man mit einer Bremse den ersten Antrieb (im Fall von Fig. 2 beispielhaft mit einer Bremse 28 an der Antriebsmaschine 4) einbremst. Die Kupplung 25 wird in dieser Anwendung geschlossenen und die Kupplung 22 geöffnet. Damit kann man bei stillstehendem Hohlrad 14 mit dem Differenzialantrieb 5 den Planetenträger 16 und in weiterer Folge die Arbeitsmaschine 1 antreiben. Ein weiterer Einsatzfall für eine solche Bremse 28 ist, im Falle einer Betriebsstörung die Antriebsmaschine 4 parallel zur Arbeitsmaschine 1 zu verzögern, um damit eine Überdrehzahl am Differenzialantrieb 5 zu verhindern.

Wie Fig. 1 und Fig. 2 zeigen, können in einem Differenzialsystem der erste und zweite Antrieb und der Abtrieb alternativ mit einem Hohlrad oder einem Planetenträger oder einem Sonnenrad verbunden werden. In einer weiteren erfindungsgemäßen Variante wird der Differenzialantrieb 5 mit dem Hohlrad 14, die Antriebsmaschine 4 mit dem Planetenträger 16 und die Arbeitsmaschine 1 mit dem Sonnenrad 13 verbunden. Weitere alternative Kombinationen sind ebenfalls von der Erfindung erfasst. Die in Fig. 2 dargestellte Konfiguration zeigt eine Ausführungsform, mit der man einfach und kostengünstig hohe Drehzahlen an der Arbeitsmaschine 1 realisieren kann. Eine beispielhafte Konfiguration, in der die Arbeitsmaschine 1 mit dem Hohlrad 14, die Antriebsmaschine 4 mit der Sonnenrad 13 und der Differenzialantrieb 5 mit dem Planetenträger 16 verbunden ist, ist eine mögliche Ausführungsvariante für Übersetzungen ins Langsame.

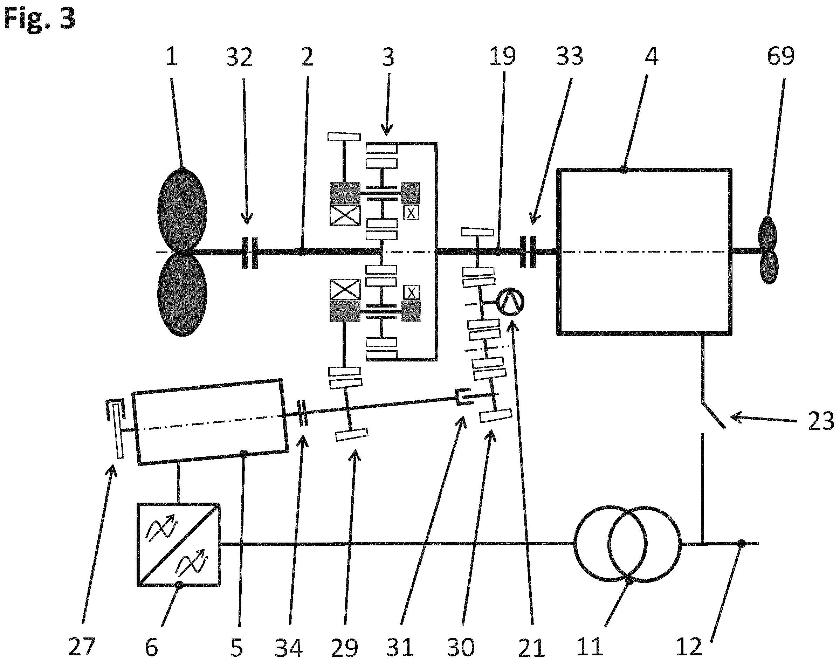

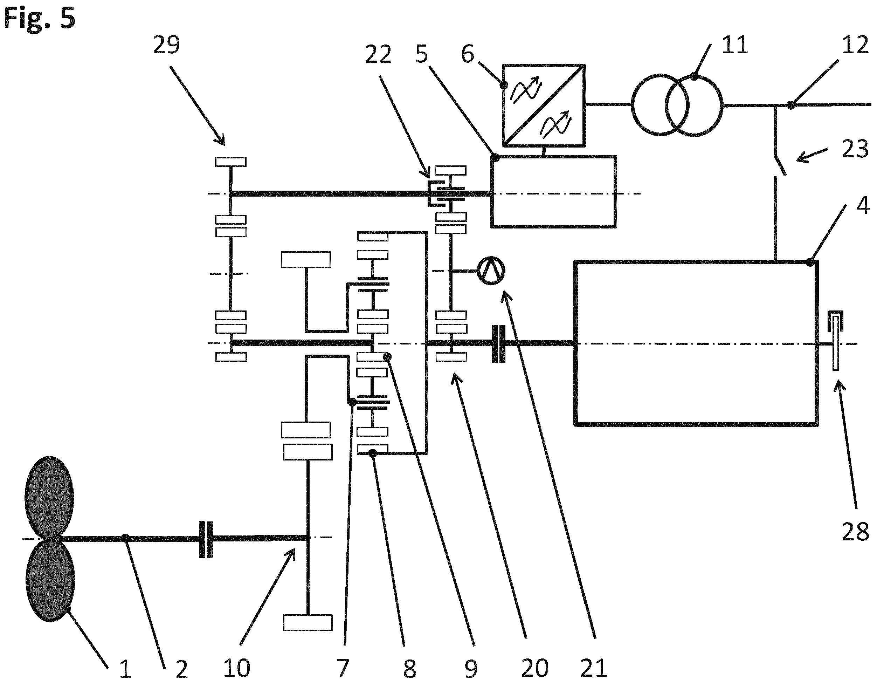

Fig. 3 zeigt eine weitere erfindungsgemäße Ausführungsform eines Differenzialsystems für schnell laufende Antriebe. Das Differenzialsystem ist prinzipiell gleich aufgebaut wie in Fig. 2 beschrieben. Im Gegensatz zu Fig. 2 ist die Übersetzungsstufe 29 als Kegelradgetriebestufe dargestellt. Damit ist die Drehachse des Differenzialantriebes 5 mit einem Winkelversatz zur Drehachse von Antriebsmaschine 4 und Arbeitsmaschine 1 angeordnet. Dadurch ergibt sich, dass auch ein Hilfsgetriebe 30 als Winkelgetriebe auszuführen ist. Mit dem Winkelversatz erreicht man, dass der Achsabstand zwischen Differenzialantrieb 5 und Arbeitsmaschine 1 vergrößert wird und dadurch die Arbeitsmaschine 1 näher an das Differenzialsystem heranrücken kann. Ebenso kann man den Differenzialantrieb 5 spiegelverkehrt in Richtung Antriebsmaschine 4 anordnen (vgl. Fig. 2 und Fig. 5) und somit die Antriebsmaschine 4 näher an das Differenzialsystem heranrücken.

Das Hilfsgetriebe 30 ist ebenso wie das Hilfsgetriebe 20 bevorzugt so auszulegen, dass (a) die Drehrichtung von Arbeitsmaschine 1 und Antriebsmaschine 4 entgegengesetzt ist und (b) die Antriebsmaschine 4 vorzugsweise ihre Betriebsdrehzahl erreicht, sobald der Differenzialantrieb 5 in den Bereich seiner Leistungsgrenze kommt.

Das Hilfsgetriebe 30 ist mittels einer Kupplung 31 mit dem Differenzialantrieb 5 verbindbar und treibt vorzugsweise auch eine Schmierölpumpe 21 an. Die Kupplung 31 kann beliebig im Pfad zwischen Differenzialantrieb 5 und Verbindungswelle 19 positioniert sein, wird jedoch, um einen Notbetrieb des Schmiersystems zu gewährleisten, vorzugsweise zwischen Schmierölpumpe 21 und Differenzialantrieb 5 angeordnet. Ist der Differenzialantrieb 5 spiegelverkehrt Richtung Antriebsmaschine 4 angeordnet, läuft das erste Zahnrad des Hilfsgetriebes 30 beispielsweise kuppelbar auf der Verbindungswelle zwischen dem Differenzialantrieb 5 und dem zweitem Antrieb des Differenzialsystems (vgl. Fig. 2 und 5).

Für die Ausführung und die Funktionen der Kupplung 31 gilt grundsätzlich das Gleiche wie für die Kupplung 22. Die Kupplung 22, 31 kann darüber hinaus auch als hydrodynamische(r) Kupplung/Drehmomentwandler mit zusätzlicher/integrierter Arretierfunktion ausgeführt und somit auch als Notbremssystem eingesetzt werden, indem sie geschlossen wird, sobald im Differenzialmodus eine Betriebsstörung im Triebstrang auftritt und der Differenzialantrieb 5 vor einer Überdrehzahl zu schützen ist (vgl. entsprechende Erläuterungen zu Fig. 2). Alternativ (oder ergänzend) kann z.B. auch eine Bremse 27, welche direkt auf den Differenzialantrieb 5 wirkt, eingesetzt werden. Grundsätzlich ist erfindungsgemäß jedoch jede Art von Kupplung einsetzbar.

Die in Fig. 3 dargestellte Kupplung 34 dient in erster Linie wie auch die Kupplungen 32 und 33 zur Verbindung von Arbeitsmaschine 1, Antriebsmaschine 4 und Differenzialantrieb 5 mit dem Getriebeteil des Differenzialsystems. Wird der Einsatz einer einfachen und kostengünstigen Kupplung 31 bevorzugt, so kann die Kupplung 34, wie schon zu Fig. 2 beschrieben, im Betrieb lösbar (evtl. auch mit einer automatischen Öffnung bei Überdrehzahl) ausgeführt werden, um den Differenzialantrieb 5 im Falle beispielsweise einer Betriebsstörung vom zweiten Antrieb des Differenzialsystems zu trennen. Damit ist grundsätzlich auch die Bremse 27 nicht mehr erforderlich. Alternativ kann man wie bereits ausgeführt, anstelle der Kupplung 31 einen Freilauf einsetzen, welcher bei einer Betriebsstörung eine Überdrehzahl am Differenzialantrieb 5 verhindert. Dies wird dadurch möglich, dass im Fehlerfall im Differenzialmodus (Betriebsmodus II) die Drehzahlen der Arbeitsmaschine 1 und der Antriebsmaschine 4 immer in Richtung "niedrigste Arbeitsdrehzahl" gehen und damit die erforderliche Freilaufrichtung entsprechend definiert ist.

Das Anfahren und der Betrieb des Differenzialsystems bis zu dessen Nennbetriebspunkt finden in drei Phasen statt, wie mit Bezug auf Fig. 3 erläutert wird. Diese drei Phasen sind:

Phase 1: Der Differenzialantrieb 5 ist mit dem zweiten Antrieb des Differenzialsystems verbunden und wird zusätzlich durch Schließen der Kupplung 31 mittels Hilfsgetriebe 30 zusätzlich mit dem ersten Antrieb (inkl. Verbindungswelle 19 und Antriebsmaschine 4) des Differenzialsystems verbunden (im Falle eines Freilaufes aktiviert sich dieser selbsttätig). Anschließend wird der Differenzialantrieb 5 beschleunigt und die Arbeitsmaschine 1 beginnt zu arbeiten. Abhängig von der Drehmomentkennlinie der Arbeitsmaschine 1 (zuzüglich einer allfällig mit dem Triebstrang verbundenen sogenannten Booster-Pumpe 69) und der Leistung des Differenzialantriebes 5 ist in diesem Betriebsmodus I vorzugsweise eine stufenlos regelbare Arbeitsdrehzahl von Null bis beispielsweise ca. 40%-50% der Arbeits-Nenndrehzahl der Arbeitsmaschine 1 realisierbar. Unter Triebstrang versteht man dabei den gesamten Antriebsstrang zwischen Antriebswelle 2 und Antriebsmaschine 4. Die Antriebsmaschine 4 bleibt in diesem Betriebsmodus I vom Netz getrennt.

Die Übersetzungsverhältnisse der in diesem Fall wirksamen Getriebe 3, 29 und 30 werden so gewählt, dass die Antriebsmaschine 4 ihre Betriebsdrehzahl erreicht, sobald der Differenzialantrieb 5 in den Bereich seiner Leistungsgrenze kommt. D.h. der Differenzialantrieb 5 wird so ausgelegt, dass er (a) die inhärenten Losbrechmomente eines Triebstranges überwinden kann und (b) im Betriebsmodus I eine Arbeitsdrehzahl erreicht, welche im Bereich einer möglichst niedrigen, im Differenzialmodus (Betriebsmodus II) erreichbaren Arbeitsdrehzahl liegt. Vorzugsweise erlaubt man unter anderem zugunsten einer Regelhysterese für die Umschaltung zwischen Betriebsmodus I und II eine mehr oder weniger große Überlappung der Arbeitsdrehzahlbereiche der Betriebsmodi I und II.

Will man den Differenzialantrieb 5 leistungsmäßig so klein wie möglich auslegen, kann man auch eine Arbeitsdrehzahl-Lücke zwischen Betriebsmodus I und II vorsehen. Dabei muss man jedoch beim Umschalten zwischen Betriebsmodus I und II Drehmoment- und Drehzahlsprünge in Kauf nehmen, welche man vorzugsweise regelungstechnisch oder auch mit Dämpfern und/oder Kupplungen und/oder hydrodynamischen Drehmomentwandlern mit zusätzlicher/integrierter Arretierfunktion - z.B. als Kupplung 31 - ausgleichen kann. Ist eine Arbeitsdrehzahl-Lücke zwischen Betriebsmodus I und Betriebsmodus II vorhanden, so kann der Differenzialantrieb 5, wie oben beschrieben, die Antriebsmaschine 4 nicht bis zu deren Betriebsdrehzahl beschleunigen. Die Antriebsmaschine 4 wird dann mit einer Drehzahl kleiner als deren Synchrondrehzahl ans Netz 12 geschaltet, was zu entsprechenden Strom- und Drehmomentstößen führt. Diese sind jedoch geringer, als wenn die Antriebsmaschine 4 mit einer Drehzahl gleich Null ans Netz 12 geschaltet wird. Der Differenzialantrieb 5 wird dabei, während die Antriebsmaschine ans Netz 12 geschaltet wird, vom Hilfsgetriebe getrennt (im Falle eines Freilaufes deaktiviert sich dieser selbsttätig) und "generiert" ein Reaktionsmoment am zweiten Antrieb des Differenzialsystems.

Der Differenzialantrieb 5 arbeitet jedenfalls in dieser ersten Phase (Betriebsmodus I) motorisch - d.h. er bezieht Energie vom Netz.

Phase 2: Sobald die Antriebsmaschine 4 ihre Betriebsdrehzahl erreicht, wird sie, wie schon zu Fig. 2 beschrieben, mit dem Netz 12 synchronisiert und der Schalter 23 geschlossen.

Da der Differenzialantrieb 5 im unteren Arbeitsdrehzahlbereich des Betriebsmodus II generatorisch arbeitet - d.h. er liefert Energie ins Netz, wird im nächsten Schritt das Drehmoment des Differenzialantriebes 5 von dem für den Betriebsmodus I erforderlichen motorischen in den für den Betriebsmodus II zunächst erforderlichen generatorischen Betrieb geregelt. Dadurch wird die Antriebsmaschine 4 kontinuierlich stärker belastet, bis das Differenzialsystem vorzugsweise in den unteren Bereich des Arbeitsdrehzahlbereiches des Betriebsmodus II kommt.

Um die Systembelastungen möglichst gering zu halten, erfolgt der Übergang vom motorischen in den generatorischen Betrieb des Differenzialantriebes vorzugsweise gedämpft, d.h. nicht schlagartig.

Phase 3: Sobald das Differenzialsystem den zu Phase 2 beschriebenen Betriebspunkt im unteren Arbeitsdrehzahlbereich des Betriebsmodus II erreicht hat, wird der Differenzialantrieb 5 vom ersten Antrieb des Differenzialsystems getrennt, indem entweder die Kupplung 31 geöffnet wird, oder sich im Falle eines Freilaufes die Verbindung selbsttätig löst (deaktiviert), sobald die Drehzahl des Differenzialantriebes kleiner wird. Das System arbeitet nun im Betriebsmodus II (= Differenzialmodus), womit in dieser dritten Phase für die Arbeitsmaschine 1 ein maximales Drehmoment bei maximaler Antriebsdrehzahl realisiert werden kann.

Um das Differenzialsystem von Betriebsmodus II auf Betriebsmodus I umzuschalten - z.B. um die Arbeitsmaschine 1 abzuschalten oder für eine geringere Fördermenge -, empfiehlt sich vorzugsweise folgender Ablauf: Zuerst wird der untere Bereich des Arbeitsdrehzahlbereiches des Betriebsmodus II angesteuert. Nach vorzugsweiser Synchronisation der beiden Kupplungshälften (mittels Drehzahlregelung des Differenzialantriebes 5), wird die Kupplung 31 geschlossen (sofern nicht als Freilauf ausgeführt). Als nächster Schritt wird das Drehmoment des Differenzialantriebes 5 von dem für den Betriebsmodus II erforderlichen generatorischen in den für den Betriebsmodus I erforderlichen motorischen Betrieb geregelt. Dadurch wird die Antriebsmaschine 4 kontinuierlich entlastet, bis diese kein Drehmoment mehr liefert. Indem der Schalter 23 anschließend geöffnet wird, kann die Antriebsmaschine 4 stoßfrei vom Netz 12 getrennt werden. Im Falle der Ausführung der Kupplung 22, 31 als Freilauf, aktiviert sich dieser dabei selbsttätig. Das Differenzialsystem arbeitet nun im Betriebsmodus I und kann damit bis zur Arbeitsdrehzahl gleich Null betrieben werden.

Fig. 4 zeigt auf einer dimensionslosen Zeitachse den Verlauf von Drehmoment und Drehzahl der Arbeitsmaschine 1, der Antriebsmaschine 4, des Differenzialantriebs 5 und der Kupplung 22, 31 während der zu Fig. 3 beschriebenen Phasen.

Phase 1: Zum Zeitpunkt T0 steht das komplette Differenzialsystem. Sobald sich der Differenzialantrieb 5 zu drehen beginnt, beschleunigen auch die Arbeitsmaschine 1 und die Antriebsmaschine 4, bis letztere ihre Betriebsdrehzahl erreicht - in Fig. 4 mit T1 gekennzeichnet. Zwischen den Zeitmarkierungen T0 und T1 arbeitet das Differenzialsystem im Betriebsmodus I.

Phase 2: Im nächsten Schritt wird die bis zu diesem Zeitpunkt ohne Last arbeitende Antriebsmaschine 4 mit dem Netz 12 synchronisiert und zum Zeitpunkt T2 der Schalter 23 geschlossen.

Daraufhin wird im folgenden Schritt (zwischen T2 und T3) das Drehmoment des Differenzialantriebes 5 vom motorischen in den generatorischen Betrieb geregelt (das Drehmoment des Differenzialantriebes 5 wechselt die Richtung). Dadurch wird die Antriebsmaschine 4 kontinuierlich stärker belastet (das Drehmoment der Antriebsmaschine 4 steigt), bis das Differenzialsystem vorzugsweise einen der unteren Arbeitspunkte des Arbeitsdrehzahlbereiches des Betriebsmodus II erreicht. Durch die dadurch entstehende neue Lastverteilung im Differenzialsystem wird das ursprünglich über die Kupplung 22, 31 fließende Drehmoment gegen Null geregelt und die Kupplung 22, 31 wird geöffnet, bzw. deaktiviert sich dabei selbsttätig im Falle eines Freilaufes. Zum Zeitpunkt T4 ist damit die Phase 2 abgeschlossen.

Die Drehzahlen für die An- und Abtriebe des Differenzialsystems bleiben in Phase 2 vorzugsweise im Wesentlichen konstant, können jedoch aufgrund von betriebsbedingten Anforderungen an die Arbeitsmaschine 1 bzw. an den Synchronisationsvorgang der Antriebsmaschine 4 auch variieren. Diesbezüglich ist eine Überlappung der Arbeitsdrehzahlen der Betriebsmodi I und II von Vorteil, da man dadurch allfällige zwischen den Zeitpunkten T1 und T2 auftretende Drehzahlschwankungen ausregeln und damit die Antriebsmaschine 4 stoßfrei mit dem Netz 12 verbinden kann.

Phase 3: Das Differenzialsystem arbeitet nun zwischen den Zeitpunkten T4 und T6 im Betriebsmodus II (= Differenzialmodus). Dabei zeigt der Bereich zwischen T4 und T5 einen Teillastbereich, in dem die Systemleistung variabel geregelt wird, bis diese zwischen T5 und T6 beispielhaft bei Nennleistung mit konstantem Nenn-Drehmoment und konstanter Nenn-Drehzahl verharrt (in Fig. 4 daher als konstante Linie dargestellt). Im Bereich zwischen T4 und T5 wechselt der Differenzialantrieb 5 vom generatorischen in den motorischen Betrieb, was in seiner Drehzahl (Drehzahl "Differenzialantrieb") sichtbar wird.

Ein Betrieb des Differenzialsystems im Betriebsmodus II mit höherer Drehzahl als Nenndrehzahl ist grundsätzlich möglich, wobei der Differenzialantrieb 5 dann im Feldschwächebereich zu betreiben ist. Dabei ist dessen Drehmoment entsprechend den bekannten Regeln der Technik nur eingeschränkt verfügbar.

Die Drehzahl der Antriebsmaschine 4 (Drehzahl "Antriebsmaschine") bleibt im Betriebsmodus II im Falle einer Drehstrommaschine im Wesentlichen konstant.

Wird die Kupplung 22 bzw. 31 als Freilauf ausgeführt, so vollzieht sich die Aktivierung/Deaktivierung der Kupplung 22, 31 selbsttätig, womit ein fließender Übergang zwischen den beschriebenen Phasen/Betriebsmodi möglich wird.

Die zeitlichen Relationen der Zeitachse in Fig. 4 sind individuell gestaltbar und richten sich nach den Auslegungskriterien des Differenzialsystems bzw. den betrieblichen Anforderungen.

Das beschriebene Betriebskonzept gilt analog auch für einen generatorischen Betrieb einer z.B. Energiegewinnungsanlage.

Im Falle des Einsatzes des erfindungsgemäßen Systems bei einer Energiegewinnungsanlage ist die Arbeitsmaschine 1 z.B. eine Windkraftanlage oder eine Wasserturbine und die Antriebsmaschine 4 eine elektrische Maschine, die im Wesentlichen im generatorischen Betrieb arbeitet. Demzufolge dreht sich der Leistungsfluss im gesamten Antriebsstrang im Vergleich zu den Darstellungen in den Fig. 1 bis 12 bzw. deren Beschreibung um. Das betrifft u.a. auch die hier in Fig. 4 beschriebene Regelung der Drehmomentrichtung des Differenzialantriebes 5 zwischen T2 und T3.

Wird das Differenzialsystem für eine sogenannte Pumpturbine (Arbeitsmaschine arbeitet zeitweise als Turbine und zeitweise als Pumpe) verwendet, kann mit dem erfindungsgemäßen System sowohl ein generatorischer (Turbine) als auch ein motorischer (Pumpe) Betrieb realisiert werden, wobei stufenlos von einer Betriebsart in die andere umgeschaltet werden kann. Der Übergang von einer Betriebsart (Turbine) in die andere (Pumpe) erfolgt dabei vorzugsweise zum Zeitpunkt T0. Grundsätzlich ist das hier beschriebene Konzept auch gemäß den in den Fig. 2 bis 12 beschriebenen Funktionen und Ausführungsvarianten erweiterbar.

Fig. 5 zeigt eine erfindungsgemäße Ausführungsform eines Differenzialsystems für vorzugsweise langsam laufende Antriebe. Das Prinzip leitet sich aus den Erläuterungen zu Fig. 1, 2 und 3 ab und kann auch für schnell laufende Antriebe eingesetzt werden. Der wesentliche Unterschied zum Konzept gemäß Fig. 2 und 3 ist, dass der Differenzialantrieb 5 mit dem Sonnenrad 9 als zweitem Antrieb des Differenzialsystems (anstelle des Planetenträgers 16 in Fig. 2 und 3) und die Arbeitsmaschine 1 mit dem Planetenträger 7 (anstelle des Sonnenrades 13 in Fig. 2 und 3) verbunden wird. Mittels einer Kupplung 22 ist der Differenzialantrieb 5 mit dem Hilfsgetriebe 20 verbindbar und treibt vorzugsweise auch eine Schmierölpumpe 21 an. Die Kupplung 22 kann beliebig im Pfad zwischen Differenzialantrieb 5 und Verbindungswelle 19 positioniert sein, wird jedoch, um einen Notbetrieb des Schmiersystems zu gewährleisten, vorzugsweise zwischen Schmierölpumpe 21 und Differenzialantrieb 5 angeordnet.

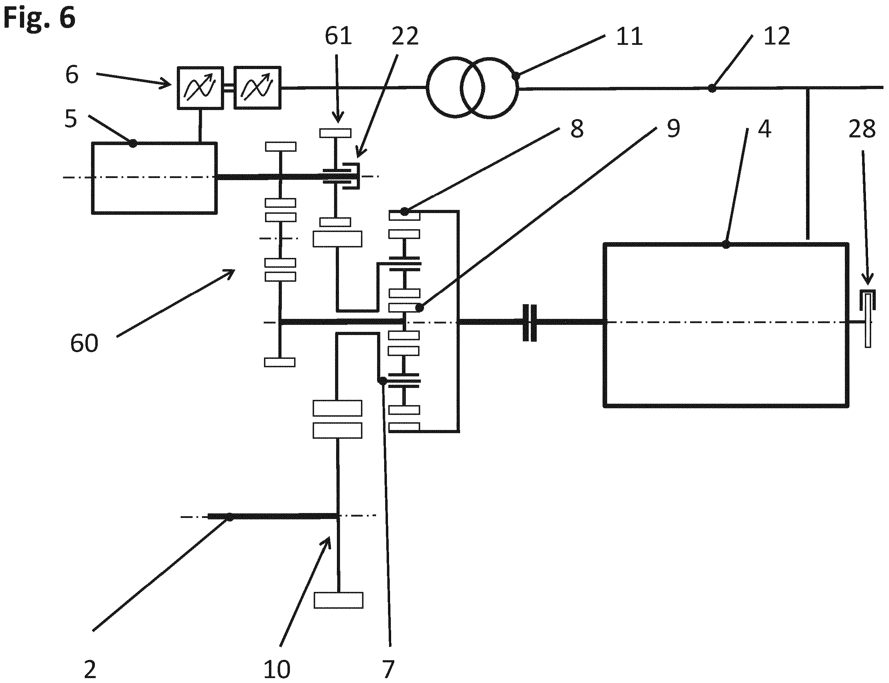

Fig. 6 zeigt eine weitere erfindungsgemäße Ausführungsform, in der ein Differenzialantrieb 5 mit dem zweiten Antrieb und dem Abtrieb eines Differenzialsystems verbindbar ist. In dieser Ausführungsform ist der Differenzialantrieb 5 einerseits mit dem zweiten Antrieb des Differenzialsystems verbunden und andererseits mittels einer Kupplung 22 und über ein Hilfsgetriebe 61 mit dem Abtrieb des Differenzialsystems bzw. der Antriebswelle 2 verbindbar. Grundsätzlich gilt Gleiches wie schon zu Fig. 2 bis 5 beschrieben, nur dass der Differenzialantrieb 5 sowohl die Antriebswelle 2 als auch die Antriebsmaschine 4 über den Planetenträger 7 und das Hohlrad 8 antreibt. Eine Anpassungsgetriebestufe 60 ist in Fig. 6 zur Optimierung des Drehzahlregelbereiches des Differenzialantriebes 5 vorgesehen.

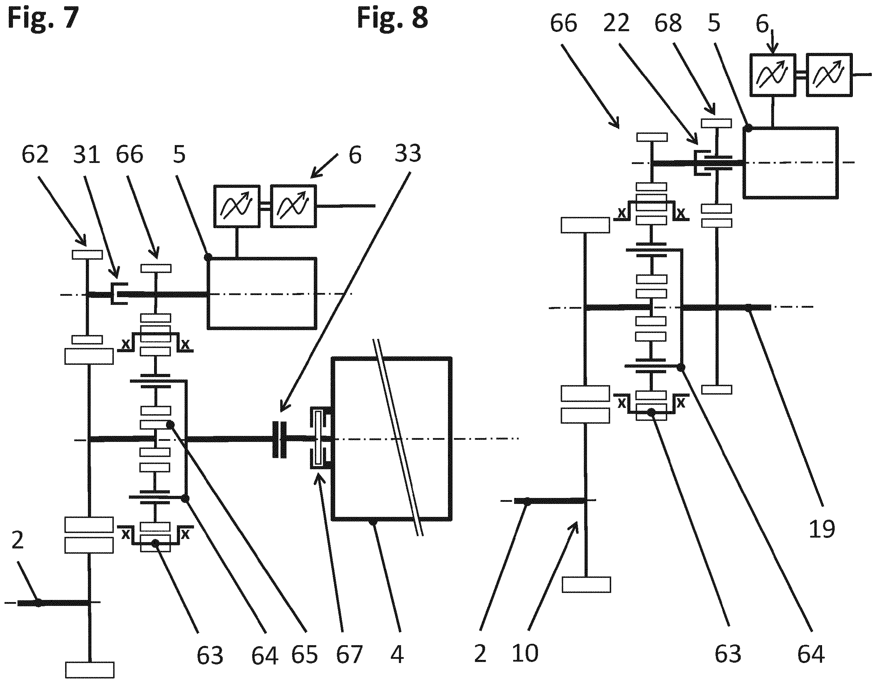

Fig. 7 zeigt eine weitere erfindungsgemäße Ausführungsform, in der ein Differenzialantrieb 5 eines Differenzialsystems mit dem zweiten Antrieb verbunden und mit dem Abtrieb verbindbar ist. Im Gegensatz zur Ausführungsform gemäß Fig. 6 ist hier der zweite Antrieb mit einem Hohlrad 63, der erste Antrieb mit einem Planetenträger 64 und der Abtrieb mit einem Sonnenrad 65 verbunden. Demzufolge regelt der Differenzialantrieb 5 über eine Übersetzungsstufe 66 und das außenverzahnte Hohlrad 63 die Drehzahl der Antriebswelle 2. Zum Anfahren ist der Differenzialantrieb 5 mittels Kupplung 31 und einem Hilfsgetriebe 62 mit dem Abtrieb des Differenzialsystems verbindbar. Für betriebsnotwendige Bremsvorgänge ist eine Bremse 67 vorgesehen (in der gezeigten Ausführungsform symbolisch als Scheibenbremse dargestellt), welche im Bereich der Abtriebswelle der Antriebsmaschine 4 positioniert ist, wobei die Bremsbacken mit der Antriebsmaschine 4 und die Bremsscheibe vorzugsweise mit der Kupplung 33 verbunden sind. Ist die Kupplung 33 mit einem Überlastschutz (z.B. Drehmomentbegrenzer) ausgeführt, so ist vorzugsweise darauf zu achten, dass dieser Überlastschutz nicht im Hauptlastpfad des Bremsmomentes liegt, um nicht damit ein maximal übertragbares Bremsmoment zu begrenzen. Der Hauptlastpfad ist dabei jener Pfad, über den der Großteil des Bremsmomentes der Bremse 67 fließt. Ein wesentlicher Vorteil für die beschriebene Positionierung der Bremse 67 an der Antriebsmaschine 4 ist, dass damit die Lagerung des ersten Antriebs des Differenzialsystems frei von allfällig wirkenden Querkräften (aufgrund ungleichförmig angreifender Bremskräfte) bleibt.

Fig. 8 zeigt eine weitere erfindungsgemäße Ausführungsform, in der ein Differenzialantrieb 5 eines Differenzialsystems via außenverzahntem Hohlrad 63 mit dem zweiten Antrieb verbunden und mit dem ersten Antrieb via Kupplung 22 und Hilfsgetriebe 68 verbindbar ist.

Die Ausführungsformen gemäß Fig. 6, 7 und 8 bieten sich insbesondere für den Einsatz bei Energiegewinnungsanlagen wie z.B. Windkraftanlagen als Arbeitsmaschine 1 an. Im diesem Falle ist die Antriebsmaschine 4 eine elektrische Maschine, die im Wesentlichen im generatorischen Betrieb arbeitet. Demzufolge dreht sich der Leistungsfluss im gesamten Antriebsstrang um (vergl. hierzu auch die Erläuterungen zu Fig. 4). Das Differenzialsystem ist dabei vorzugsweise ein Teil eines sogenannten Hauptgetriebes, wobei die Antriebswelle 2 dabei in den meisten Fällen mit weiteren Getriebestufen dieses Hauptgetriebes verbunden ist, um eine für die Arbeitsmaschine erforderliche niedrige Drehzahl bei entsprechend hohem Drehmoment zu erreichen.

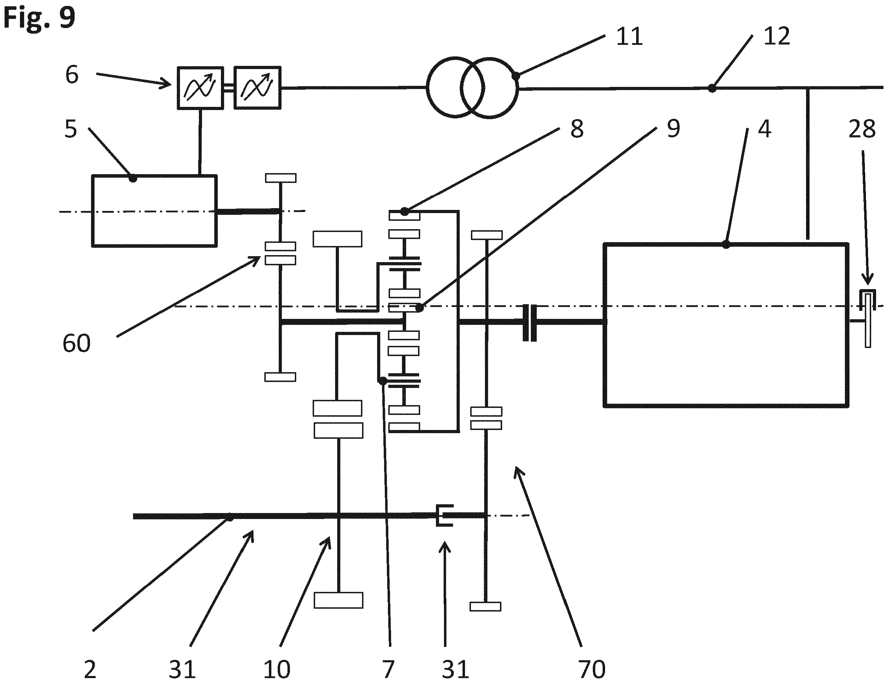

Fig. 9 zeigt eine weitere erfindungsgemäße Ausführungsform, in welcher der Abtrieb mit dem ersten Antrieb eines Differenzialsystems verbindbar ist. In dieser Darstellung ist einerseits der Differenzialantrieb 5 mit dem zweiten Antrieb verbunden und andererseits der Abtrieb des Differenzialsystems bzw. beispielsweise die Antriebswelle 2 über ein Hilfsgetriebe 70 mittels Kupplung 31 mit dem ersten Antrieb des Differenzialsystems bzw. in weiterer Folge die Antriebsmaschine 4 verbindbar. Grundsätzlich gilt Gleiches wie schon zu Fig. 2 bis 8 beschrieben, nur dass der Differenzialantrieb 5 im Betriebsmodus I die Antriebsmaschine 4 über den Abtrieb des Differenzialsystems bzw. in der gezeigten Ausführungsvariante über die Antriebswelle 2 zusätzlich antreibt.

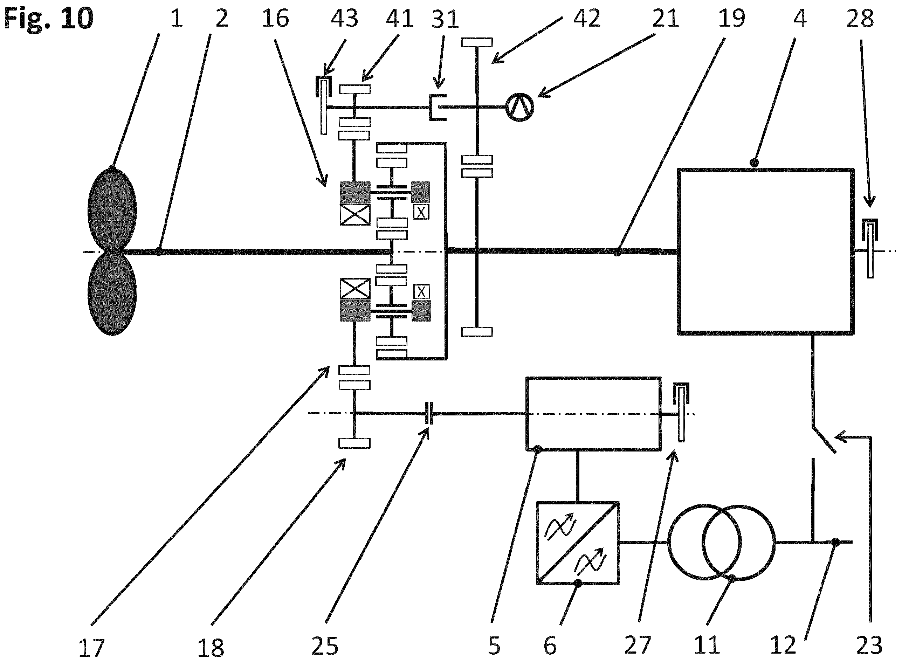

Fig. 10 zeigt eine weitere erfindungsgemäße Ausführungsform, in der der Differenzialantrieb 5 über den zweiten Antrieb, ein Übersetzungsgetriebe 41 und ein Hilfsgetriebe 42 mit dem ersten Antrieb des Differenzialsystems verbindbar ist.

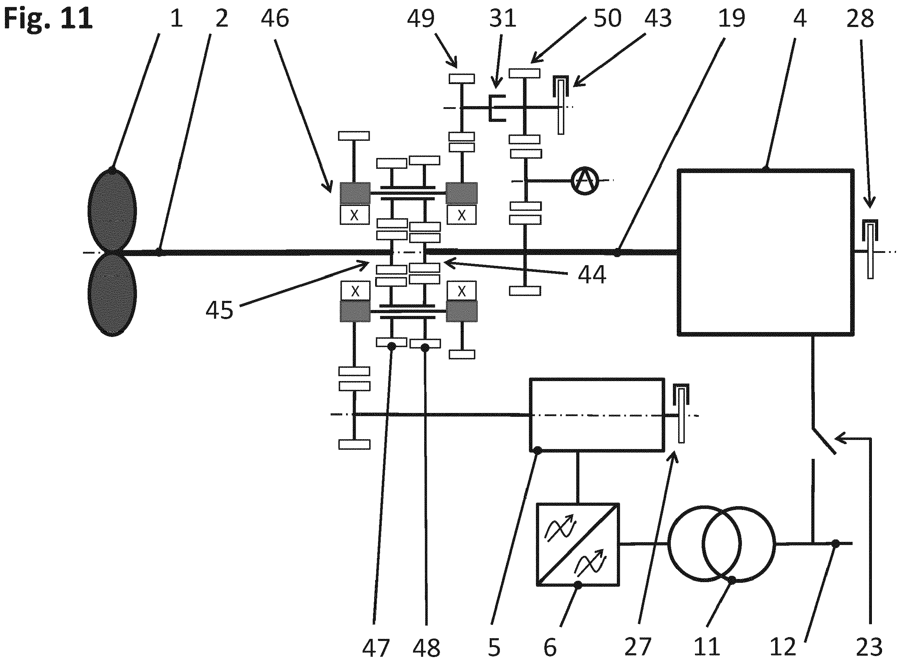

Fig. 11 zeigt eine erfindungsgemäße Ausführungsform des Differenzialsystems mit einem sogenannten Plusgetriebe (auch als Umlaufrädergetriebe bezeichnet). Dabei ist die Antriebswelle 19 des ersten Antriebs des Differenzialsystems mit einem ersten Sonnenrad 44 und die Arbeitsmaschine 1 mit einem zweiten Sonnenrad 45 verbunden. Ein Planetenträger 46 ist mit zwei oder mehreren Stufenplaneten 47, 48 ausgestattet. Stufenplaneten sind dadurch gekennzeichnet, dass die Planetenräder jeweils zwei Zahnräder 47,48 aufweisen, welche miteinander drehfest verbunden sind und unterschiedliche Teilkreisdurchmesser aufweisen. In der dargestellten Ausführungsform der Erfindung wirkt das Zahnrad 48 mit dem Sonnenrad 44 und das Zahnrad 47 mit dem Sonnenrad 45 zusammen. Der Differenzialantrieb 5 treibt den Planetenträger 46 drehzahlvariabel an. Zur Realisierung des Betriebsmodus I ist der Planetenträger 46 über eine Übersetzungsstufe 49 und ein Hilfsgetriebe 50 mit dem ersten Antrieb des Differenzialsystems bzw. der Antriebsmaschine 4 verbindbar. Die Drehrichtungen der Antriebsmaschine 4 und der Arbeitsmaschine 1 sind hier gleich und die Übersetzungsstufe 49 dreht in Kombination mit dem Hilfsgetriebe 50 die Drehrichtung gegenüber dem Planetenträger 46 um. Die gezeigte Ausführungsform eines Differenzialsystems in Form eines Plusgetriebes erlaubt kleine Übersetzungsverhältnisse zwischen der Antriebsmaschine 4 und der Arbeitsmaschine 1 und ist aufgrund des Fehlens von Hohlrädern auch kostengünstig herzustellen.

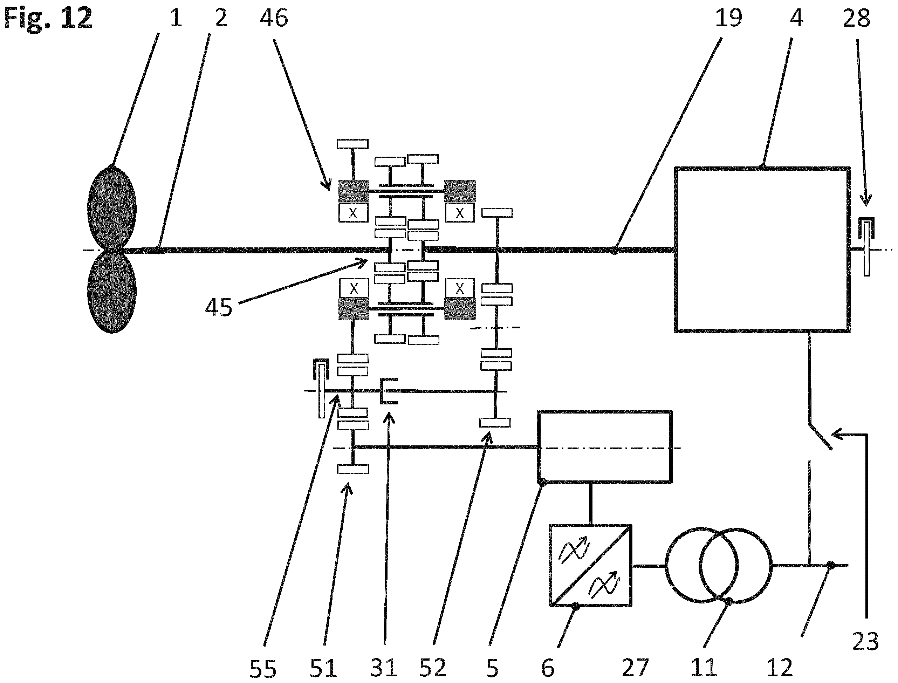

Fig. 12 zeigt eine weitere erfindungsgemäße Ausführungsform des Differenzialsystems in Form eines Plusgetriebes. Grundsätzlich leitet sich dessen Funktion aus den Ausführungen zu Fig. 11 ab. In diesem Ausführungsbeispiel ist jedoch das Hilfsgetriebe 52 mit dem Übersetzungsgetriebe 51 verbindbar. In einer weiteren erfindungsgemäßen Ausführungsform wird der Differenzialantrieb 5 direkt mit der Welle 55 verbunden.

Wie die Fig. 2 bis 12 beispielhaft zeigen, gibt es eine Vielzahl von erfindungsgemäßen Möglichkeiten, die Funktion des erfindungsgemäßen Anfahrens zu realisieren. Grundsätzlich geht es immer um eine Überbrückung des Differenzialsystems, z.B. mittels eines Hilfsgetriebes 20, 30, 42, 50, 52, 53, 61, 62, 68, 70, sodass die Antriebsmaschine 4 ihre Betriebsdrehzahl erreicht, sobald die Arbeitsmaschine 1 etwa eine untere Arbeitsdrehzahl im Betriebsmodus II erreicht. Eine mehr oder weniger große Überlappung der Arbeitsdrehzahlbereiche der Betriebsmodi I und II oder eine Arbeitsdrehzahl-Lücke kann jedoch, wie erläutert, vorhanden sein. Erfindungsgemäß werden aber bei allen Ausführungsformen die Antriebsmaschine 4 und Arbeitsmaschine 1 mittels Differenzialantrieb 5 parallel hochgefahren.

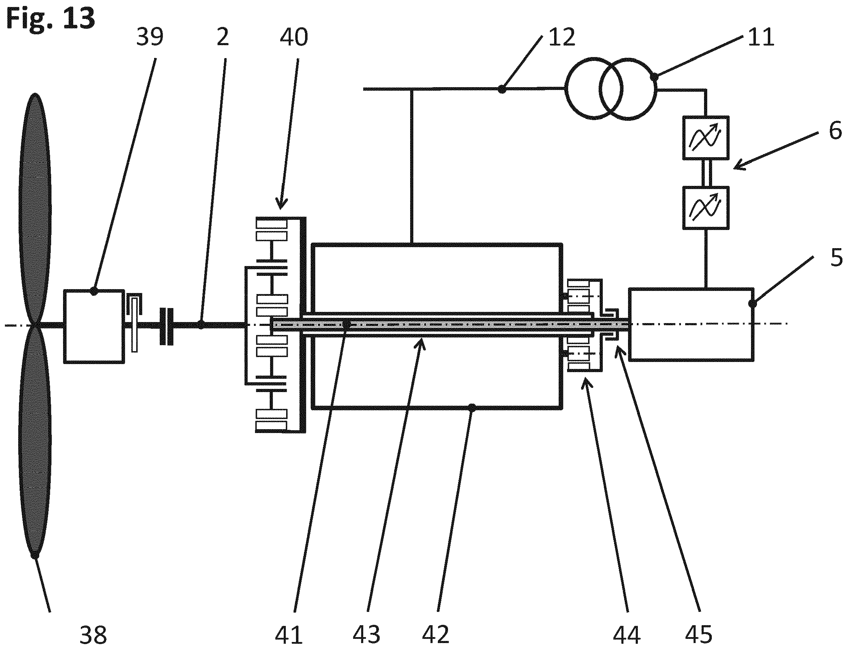

Fig. 13 zeigt eine weitere erfindungsgemäße Ausführungsform eines Differenzialsystems für eine Energiegewinnungsanlage. Im Falle des Einsatzes des erfindungsgemäßen Systems bei einer Energiegewinnungsanlage ist die Antriebsmaschine 42 eine elektrische Maschine, die im Wesentlichen im generatorischen Betrieb arbeitet - vorzugsweise eine fremderregte Mittelspannungs-Synchronmaschine. (siehe auch Erläuterungen zu Fig. 4 und 8).

Die Arbeitsmaschine 38 (z.B. der Rotor einer Windkraftanlage) treibt dabei über das Hauptgetriebe 39 den Planetenträger einer Differenzialstufe 40 an. Die in Verbindung mit den Fig. 1 bis 12 beschriebene Antriebsmaschine wird somit im Arbeitsbetriebsbereich als Generator 42 betrieben. Ein über den Umrichter 6 und den Transformator 11 an das Netz 12 angeschlossener Differenzialantrieb 5 ist mittels der Welle 35 (welche koaxial in einer Rotor-Hohlwelle 43 des Generators 42 geführt wird) mit dem zweiten Antrieb des Differenzialgetriebes 40 verbunden. Der Differenzialantrieb 5 ist mittels eines Hilfsgetriebes 53 und der Kupplung 54 mit der Rotorwelle 43 der Antriebsmaschine 42 verbindbar, wobei der Planetenträger des Hilfsgetriebes 53 drehfest mit dem Gehäuse des Generators 42 verbunden bzw. in dieses integriert ist. Für die Ausführung der Kupplung 54 gilt grundsätzlich gleiches wie für die Kupplung 22, 31. Das schematisch als Planetenstufe dargestellte Hilfsgetriebe 53 kann auch durch eine/mehrere Stirnrad- oder Kegelradstufe(n) ersetzt werden. Dies gilt insbesondere, wenn gemäß AT 511 720 A das Differenzialsystem mit mehreren, über eine Stirnradstufe verbundene, Differenzialantriebe ausgeführt ist. Grundsätzlich ist jedoch jede Art von Getriebe bzw. Riemenantriebe und dergleichen einsetzbar.

Anstelle des Differenzialantriebes 5 kann ein hydrostatisches Stellgetriebe eingesetzt werden. Dabei werden der Differenzialantrieb 5 und der Umrichter 6 durch eine zwei - oder mehrteilige hydrostatische Pumpe/Motor-Kombination ersetzt, welche mit einer Druckleitung verbunden und vorzugsweise im Durchflussvolumen verstellbar sind. Damit sind wie im Falle eines drehzahlvariablen elektrischen Differenzialantriebes die Drehzahlen regelbar. Dabei ist ein Teil der Pumpen/Motor-Kombination vorzugsweise mit der Antriebswelle 2, und/oder mittels eines elektrischen Antriebs zumindest zeitweise mit dem Netz 12 verbunden, und/oder wird ein Teil der Pumpen/Motor-Kombination durch eine sonstige Antriebseinheit zeitweise angetrieben.

Diese Ausführungsvariante ist analog auch bei Einsatz eines hydrodynamischen Drehmomentwandlers als Differenzialantrieb anwendbar.

Das erfindungsgemäße System kann auch dazu verwendet werden, die Antriebsmaschine 4 bzw. den Generator 42 im sogenannten Phasenschiebebetrieb zu betreiben. D.h., dass die Antriebsmaschine entweder als Motor 4 bzw. als Generator 42 Blindstrom in das bzw. aus dem Netz 12 liefern bzw. beziehen kann, ohne dass die Arbeitsmaschine 1 betrieben wird. Dabei wird die Antriebsmaschine 4 bzw. 42 vorzugsweise mittels Differenzialantrieb 5 bloß mit dem Netz 12 synchronisiert und verbunden und anschließend der Differenzialantrieb 5 vorzugsweise durch Öffnen der Kupplung 22, 31, 54 von der Antriebsmaschine 4, 42 getrennt, ohne die weiteren Schritte des beschriebenen Anfahrprozesses auszuführen. Dies erfolgt erst, wenn die Arbeitsmaschine 1 den Betrieb aufzunehmen hat.

**Patentansprüche**

1. Triebstrang mit einer Antriebswelle (2) einer Arbeitsmaschine (1, 38), mit einer Antriebsmaschine (4, 42) und mit einem Differenzialgetriebe (3, 7 bis 9, 40) mit drei An- bzw. Abtrieben, wobei ein Abtrieb mit der Antriebswelle (2), ein erster Antrieb mit der Antriebsmaschine (4, 42) und ein zweiter Antrieb mit einem Differenzialantrieb (5) verbindbar ist, **dadurch gekennzeichnet, dass** ein Antrieb gleichzeitig mit dem anderen Antrieb oder mit dem Abtrieb verbindbar ist.

2. Triebstrang nach Anspruch 1, **dadurch gekennzeichnet, dass** der Antrieb mittels eines Hilfsgetriebes (20, 30, 42, 50, 52, 53, 61, 62, 68, 70) mit dem anderen Antrieb oder mit dem Abtrieb verbindbar ist.

3. Triebstrang nach Anspruch 1 oder 2, **dadurch gekennzeichnet, dass** der Differenzialantrieb (5) gleichzeitig einerseits mit dem ersten Antrieb oder dem Abtrieb und andererseits dem zweiten Antrieb verbindbar ist.

4. Triebstrang nach einem der Ansprüche 1 bis 3, **dadurch gekennzeichnet, dass** der Differenzialantrieb (5) mit dem ersten Antrieb oder dem Abtrieb trennbar und mit dem zweiten Antrieb permanent verbunden ist.

5. Triebstrang nach einem der Ansprüche 1 bis 4, **dadurch gekennzeichnet, dass** der Differenzialantrieb (5) gleichzeitig mit dem zweiten Antrieb generatorisch über den Abtrieb mit dem ersten Antrieb verbindbar ist.

6. Triebstrang nach einem der Ansprüche 1 bis 4, **dadurch gekennzeichnet, dass** der Differenzialantrieb (5) mit dem zweiten Antrieb und der zweite Antrieb gleichzeitig mit dem ersten Antrieb verbindbar ist.

7. Triebstrang nach einem der Ansprüche 1 bis 6, **dadurch gekennzeichnet, dass** der Differenzialantrieb (5) mit dem ersten Antrieb und/oder mit dem Abtrieb über ein Hilfsgetriebe (20, 30, 42, 50, 52, 53, 61, 62, 68, 70) verbindbar ist.

8. Triebstrang nach einem der Ansprüche 1 bis 7, **dadurch gekennzeichnet, dass** der Differenzialantrieb (5) mit dem ersten und/oder zweiten Antrieb und/oder dem Abtrieb über eine Kupplung (22, 31, 54) verbindbar ist.

9. Triebstrang nach Anspruch 8, **dadurch gekennzeichnet, dass** die Kupplung (22, 31, 54) eine Klauenkupplung, Zahnkupplung, Freilauf oder Lamellenkupplung ist.

10. Triebstrang nach Anspruch 8, **dadurch gekennzeichnet, dass** die Kupplung eine hydrodynamische Kupplung, gegebenenfalls mit einer zusätzlichen Arretierungsfunktion, ist.

11. Triebstrang nach einem der Ansprüche 1 bis 10, **dadurch gekennzeichnet, dass** der zweite Antrieb mit einer Bremse (26) verbunden ist.

12. Triebstrang nach einem der Ansprüche 1 bis 11, **dadurch gekennzeichnet, dass** der erste Antrieb mit einer Bremse (28) verbunden ist.

13. Triebstrang nach einem der Ansprüche 1 bis 12, **dadurch gekennzeichnet, dass** der Differenzialantrieb (5) eine Drehstrommaschine, insbesondere eine Asynchronmaschine oder eine permanentmagneterregte Synchronmaschine, ist.

14. Triebstrang nach einem der Ansprüche 1 bis 12, **dadurch gekennzeichnet, dass** der Differenzialantrieb (5) eine hydrostatische Pumpe/Motor-Kombination ist.

15. Triebstrang nach einem der Ansprüche 1 bis 14, **dadurch gekennzeichnet, dass** das Differenzialgetriebe ein Planetengetriebe ist.

16. Triebstrang nach einem der Ansprüche 1 bis 15, **dadurch gekennzeichnet, dass** die Antriebsmaschine (4) mit dem Hohlrad (14), der Differenzialantrieb (5) mit dem Planetenträger (16) und die Arbeitsmaschine (1) mit dem Sonnenrad (13) verbunden ist.

17. Triebstrang nach einem der Ansprüche 1 bis 15, **dadurch gekennzeichnet, dass** die Antriebsmaschine mit dem Planetenträger, der Differenzialantrieb (5) mit dem Hohlrad (14) und die Arbeitsmaschine mit dem Sonnenrad (13) verbunden ist.

18. Triebstrang nach einem der Ansprüche 1 bis 15, **dadurch gekennzeichnet, dass** die Antriebsmaschine (4) mit dem Hohlrad (8), der Differenzialantrieb (5) mit dem Sonnenrad (9) und die Arbeitsmaschine (1, 38) mit dem Planetenträger (7) verbunden ist.

19. Triebstrang nach einem der Ansprüche 1 bis 18, **dadurch gekennzeichnet, dass** zwei oder mehrere Differenzialantriebe (5) vorgesehen sind.

20. Triebstrang nach einem der Ansprüche 1 bis 19, **dadurch gekennzeichnet, dass** im Antriebsstrang zwischen dem Differenzialantrieb (5) und dem ersten Antrieb eine Schmierölpumpe (21) angeordnet ist.

21. Triebstrang nach Anspruch 20, **dadurch gekennzeichnet, dass** die Kupplung (22, 31), über welche der Differenzialantrieb (5) mit dem ersten Antrieb oder dem Abtrieb verbindbar ist, zwischen dem Differenzialantrieb (5) und der Schmierölpumpe (21) angeordnet ist.

22. Triebstrang nach einem der Ansprüche 1 bis 21, **dadurch gekennzeichnet, dass** die Arbeitsmaschine (1) eine Pumpe, ein Kompressor, Ventilator, Förderband, Brecher oder eine Mühle ist.

23. Triebstrang nach einem der Ansprüche 1 bis 21, **dadurch gekennzeichnet, dass** die Arbeitsmaschine (38) eine Energiegewinnungsanlage, insbesondere eine Windkraftanlage, Wasserkraftanlage oder Meeresströmungsanlage, ist.

24. Triebstrang nach einem der Ansprüche 1 bis 23, **dadurch gekennzeichnet, dass** der Differenzialantrieb (5) über einen Freilauf mit dem ersten oder zweiten Antrieb verbunden ist.

25. Verfahren zum Anfahren eines Triebstranges mit einer Antriebswelle (2) einer Arbeitsmaschine (1, 38), mit einer Antriebsmaschine (4, 42) und mit einem Differenzialgetriebe (3, 7 bis 9, 40) mit drei An- bzw. Abtrieben, wobei ein Abtrieb mit der Antriebswelle (2), ein erster Antrieb mit der Antriebsmaschine (4, 42) und ein zweiter Antrieb mit einem Differenzialantrieb (5) verbindbar ist, **dadurch gekennzeichnet, dass** die Antriebsmaschine (4, 42) von einer Drehzahl von Null oder annähernd Null angefahren wird, während ein Antrieb gleichzeitig mit dem anderen Antrieb oder mit dem Abtrieb verbunden ist.

26. Verfahren nach Anspruch 25, **dadurch gekennzeichnet, dass** die Antriebsmaschine (4, 42) von einer Drehzahl von Null oder annähernd Null angefahren wird, während der Differenzialantrieb (5) gleichzeitig einerseits mit dem ersten Antrieb oder dem Abtrieb und andererseits mit dem zweiten Antrieb verbunden ist.

27. Verfahren nach Anspruch 25 oder 26, **dadurch gekennzeichnet, dass** die Antriebsmaschine (4, 42) eine elektrische Maschine ist und in dieser Phase vom Netz (12) getrennt ist.

28. Verfahren nach einem der Ansprüche 25 bis 27, **dadurch gekennzeichnet, dass** der Differenzialantrieb (5) motorisch arbeitet und gleichzeitig einerseits den ersten Antrieb oder den Abtrieb und andererseits den zweiten Antrieb antreibt.

29. Verfahren nach einem der Ansprüche 25 bis 28, **dadurch gekennzeichnet, dass** die Arbeitsmaschine in dieser Phase auf einen Drehzahlbereich von bis zu ca. 40%-50% der Arbeits-Nenndrehzahl der Arbeitsmaschine (1) beschleunigt wird.

30. Verfahren nach einem der Ansprüche 25 bis 29, **dadurch gekennzeichnet, dass** die Antriebsmaschine (4, 42) anschließend mit einem Netz (12) synchronisiert und verbunden wird.

31. Verfahren nach Anspruch 30, **dadurch gekennzeichnet, dass** mittels des Differenzialantriebs (5) die Drehzahl und insbesondere der Phasenwinkel der elektrischen Maschine (4, 42) mit dem Netz (12) synchronisiert wird.

32. Verfahren nach Anspruch 30 oder 31, **dadurch gekennzeichnet, dass** der Differenzialantrieb (5) nach dem Synchronisieren der Antriebsmaschine (4, 42) vom motorischen in den generatorischen Betrieb wechselt.

33. Verfahren nach einem der Ansprüche 25 bis 32, **dadurch gekennzeichnet, dass** anschließend die Verbindung zwischen dem Antrieb und dem anderen Antrieb bzw. dem Abtrieb getrennt wird.

34. Verfahren nach einem der Ansprüche 26 bis 33, **dadurch gekennzeichnet, dass** anschließend der Differenzialantrieb (5) vom ersten Antrieb getrennt wird.

35. Verfahren nach Anspruch 25, **dadurch gekennzeichnet, dass** die Antriebsmaschine (4) eine Verbrennungskraftmaschine ist und mit Unterstützung des Differenzialantriebes (5) gestartet wird.

36. Verfahren nach einem der Ansprüche 25 bis 35, **dadurch gekennzeichnet, dass** der zweite Antrieb verzögert wird, bevor er mit dem Differenzialantrieb (5) verbunden wird.

37. Verfahren nach einem der Ansprüche 25 bis 35, **dadurch gekennzeichnet, dass** der zweite Antrieb gebremst oder blockiert wird, während er vom Differenzialantrieb (5) getrennt ist.

38. Verfahren nach einem der Ansprüche 25 bis 37, **dadurch gekennzeichnet, dass** die Antriebsmaschine (4, 42) im Wesentlichen ihre Betriebsdrehzahl erreicht, sobald der Differenzialantrieb (5) in den Bereich seiner Leistungsgrenze kommt.

39. Verfahren nach einem der Ansprüche 25 bis 38, **dadurch gekennzeichnet, dass** die Antriebsmaschine (4, 42) im Phasenschiebebetrieb arbeitet, nachdem sie vom Differenzialantrieb (5) mit dem Netz (12) synchronisiert wurde.

40. Verfahren nach einem der Ansprüche 25 bis 39, **dadurch gekennzeichnet, dass** der erste Antrieb für einen Betrieb der Arbeitsmaschine im niedrigen Drehzahlbereich mit einer Bremse (28) gebremst bzw. blockiert wird, während der Differenzialantrieb (5) den zweiten Antrieb antreibt.

41. Verfahren nach einem der Ansprüche 25 bis 40, **dadurch gekennzeichnet, dass** der zweite Antrieb für einen Betrieb der Arbeitsmaschine im niedrigen Drehzahlbereich mit einer Bremse (26) gebremst bzw. blockiert wird, während der Differenzialantrieb (5) den ersten Antrieb antreibt.

42. Verfahren nach einem der Ansprüche 25 bis 41, **dadurch gekennzeichnet, dass** der Differenzialantrieb (5) bei einer Betriebsstörung mit dem ersten und zweiten Antrieb oder Abtrieb verbunden wird.

Fig. 1

# Fig. 2

1 2 16 17 3 14 15 13 21 19 4 28

## Fig. 2a

Drehmoment Arbeitsmaschine

Drehmoment

Drehzahl

26 18 24 25 22 20 5 6 27 11 12 23

EP 4 375 540 A1

# Fig. 3

# Fig. 4

Drehzahl

0

– – – Arbeitsmaschine
– · – · Differenzialantrieb
——— Antriebsmaschine
- - - - Kupplung

Zeit

Drehmoment

0

Zeit

$T_0$  $T_1$  $T_2$  $T_3$  $T_4$  $T_5$  $T_6$

Betriebsmodus I

Betriebsmodus II

# Fig. 5

Fig. 6

Fig. 8

Fig. 7

**Fig. 9**

Fig. 10

EP 4 375 540 A1

# Fig. 11

**Fig. 12**

1  2  46  19  4  28

45

55  51  31  52  5  6  27  11  12

23

EP 4 375 540 A1

Fig. 13

Europäisches
Patentamt

European
Patent Office

Office européen
des brevets

## EUROPÄISCHER RECHERCHENBERICHT

**Nummer der Anmeldung**

EP 23 17 9757

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/000008 A1 (HEHENBERGER GERALD [AT]) 6. Januar 2011 (2011-01-06) * das ganze Dokument * | 1,3-16, 25-27,42 | INV. F16H3/72 B60K6/365 B60K6/387 |
| X | DE 36 40 146 A1 (ECKHARDT HANS GUENTER DIPL ING [DE]) 1. Juni 1988 (1988-06-01) * Spalte 2, Zeile 1 – Spalte 7, Zeile 18; Abbildung 1 * | 1-4, 6-16,22, 25-27,42 | B60K6/48 H02P5/753 H02K7/116 |
| X | DE 12 59 164 B (DAIMLER BENZ AG) 18. Januar 1968 (1968-01-18) * das ganze Dokument * | 1-4, 6-10,13, 15,16, 22,25,26 | ADD. B60K6/26 |
| X | DE 11 51 860 B (LICENTIA GMBH) 25. Juli 1963 (1963-07-25) | 1-5, 7-11,13, 15,16,22 | |
| A | * das ganze Dokument * | 25 | |
| A,D | AT 511 720 A4 (HEHENBERGER GERALD [AT]) 15. Februar 2013 (2013-02-15) * Seite 4, Absatz 4 – Seite 5, Absatz 1; Abbildungen 2,3 * | 1 | |
| X | US 5 433 282 A (MOROTO SHUZO [JP] ET AL) 18. Juli 1995 (1995-07-18) | 1,3,4, 8-10,12, 15,16 | |
| A | * Spalte 7, Zeile 37 – Spalte 8, Zeile 56; Abbildungen 15-18 * | 25-27,42 | |

**RECHERCHIERTE SACHGEBIETE (IPC)**

F16H
B60K
H02P
H02K

Der vorliegende Recherchenbericht wurde für alle Patentansprüche erstellt

| Recherchenort | Abschlußdatum der Recherche | Prüfer |
|---|---|---|
| München | 15. April 2024 | Wurzer, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

**Nummer der Anmeldung**

**EP 23 17 9757**

## GEBÜHRENPFLICHTIGE PATENTANSPRÜCHE

Die vorliegende europäische Patentanmeldung enthielt bei ihrer Einreichung Patentansprüche, für die eine Zahlung fällig war.

[X] Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

**16, 22, 25-27, 42**

[ ] Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

[ ] Alle weiteren Recherchengebühren wurden innerhalb der gesetzten Frist entrichtet. Der vorliegende europäische Recherchenbericht wurde für alle Patentansprüche erstellt.

[ ] Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

[ ] Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

[ ] Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

[ ] Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

## ANHANG ZUM EUROPÄISCHEN RECHERCHENBERICHT
## ÜBER DIE EUROPÄISCHE PATENTANMELDUNG NR.

EP 23 17 9757

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2024

| Im Recherchenbericht angeführtes Patentdokument | Datum der Veröffentlichung | Mitglied(er) der Patentfamilie | Datum der Veröffentlichung |
|---|---|---|---|
| WO 2011000008 A1 | 06-01-2011 | AT 508411 A1 | 15-01-2011 |
| | | BR 112012000004 A2 | 24-09-2019 |
| | | CA 2766941 A1 | 06-01-2011 |
| | | CN 102483039 A | 30-05-2012 |
| | | DK 2449258 T3 | 26-10-2015 |
| | | EP 2449258 A1 | 09-05-2012 |
| | | ES 2551857 T3 | 24-11-2015 |
| | | US 2012115661 A1 | 10-05-2012 |
| | | WO 2011000008 A1 | 06-01-2011 |
| DE 3640146 A1 | 01-06-1988 | KEINE | |
| DE 1259164 B | 18-01-1968 | KEINE | |
| DE 1151860 B | 25-07-1963 | KEINE | |
| AT 511720 A4 | 15-02-2013 | AT 511720 A4 | 15-02-2013 |
| | | DE 202012102872 U1 | 22-08-2012 |
| US 5433282 A | 18-07-1995 | JP 2857535 B2 | 17-02-1999 |
| | | JP H05319110 A | 03-12-1993 |
| | | US 5433282 A | 18-07-1995 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 507394 A
- DE 202012101708 U

- AT 514396 A
- AT 511720 A